(19) Europäisches Patentamt
European Patent Office
Office européen des brevets

(11) Veröffentlichungsnummer: **0 003 599**
**A1**

(12) # EUROPÄISCHE PATENTANMELDUNG

(21) Anmeldenummer: **79100364.3**

(22) Anmeldetag: **08.02.79**

(51) Int. Cl.²: **C 07 F 9/40**, D 06 M 13/32, D 06 M 15/62

(30) Priorität: **14.02.78 DE 2806049**

(43) Veröffentlichungstag der Anmeldung: **22.08.79 Patentblatt 79/17**

(84) Benannte Vertragsstaaten: **BE CH DE FR GB IT NL**

(71) Anmelder: **HOECHST AKTIENGESELLSCHAFT, Zentrale Patentabteilung Postfach 80 03 20, D-6230 Frankfurt/Main 80 (DE)**

(72) Erfinder: **Dürsch, Walter, Dr., In der Braubach 4, D-6240 Königstein/Taunus (DE)**
Erfinder: **Linke, Fritz, Dr., Im Flemetz 8, D-6240 Königstein/Taunus (DE)**

(54) **Organische Phosphor-Verbindungen mit 2-Hydroxyalkylphosphonsäuregruppen, Verfahren zu ihrer Herstellung und ihre Verwendung als Flammhemmittel.**

(57) Organische Phosphor-Verbindungen mit 2-Hydroxyalkylphosphonsäuregruppen der Formel I

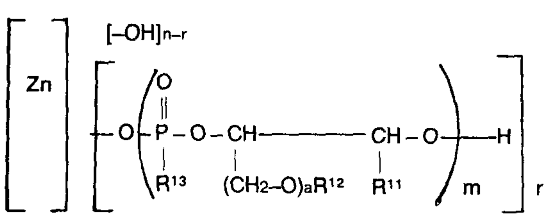

(I)

wobei die einzelnen Symbole die in der Beschreibung genannten Bedeutungen haben. Diese Verbindungen werden hergestellt, indem man 1 Mol einer Verbindung der allgemeinen Formel II

$$Zn(OH)_n \qquad (II)$$

mit 1 bis $n \cdot 25$ Molen von in 2-Stellung substituierten 2-Oxo-1,3,2-dioxa-phospholanen der allgemeinen Formel III

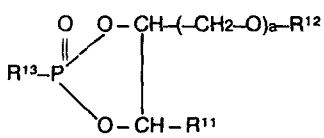

(III)

umsetzt.

Diese Phosphorverbindungen der Formel I eignen sich als Flammhemmittel für Textilmaterial.

EP 0 003 599 A1

HOECHST AKTIENGESELLSCHAFT HOE 78/F 027 Dr. OT/wö

Organische Phosphor-Verbindungen mit 2-Hydroxyalkylphosphonsäuregruppen, Verfahren zu ihrer Herstellung und ihre Verwendung als Flammhemmittel

Der Bedarf an Phosphor-Verbindungen mit vernetzbaren Hydroxyl-Gruppen ist in den letzten Jahren gestiegen. Z.B. sind für optimale permanente Flammhemmausrüstungen, vor allen von textilen Bodenbelägen, je nach chemischer Substrat-Beschaffenheit "maßgeschneiderte" wasserlösliche Phosphor-Verbindungen mit speziellen niederen oder höheren Hydroxylzahlen, mit hohem Phosphor-Gehalt und speziellen Verzweigungsgraden notwendig.

Verbindungen mit Phosphonsäureester- und Hydroxylgruppen im Molekül wurden bereits durch Oxalkylierung von Phosphonsäuren mit bevorzugt Äthylen- oder Propylenoxid erhalten. Besonders bei kurzkettigen Phosphonsäuren werden dabei jedoch weit mehr als die theoretisch notwendigen 2 Mole an Alkylenoxid bis zur völligen Neutralisation der freien Säuren benötigt. Ein Teil der Alkylenoxide wird in Form von meist unerwünschten (2-Hydroxy-alkyl)-alkyläthergruppen vergeudet.

Ferner wurden bereits Phosphonsäure-dialkylester durch Einwirkung von Di-halogen-alkanen bei Temperaturen um 180°C in oligomere Phosphonsäure-ester überführt, die gegebenenfalls noch nachoxalkyliert wurden (US 3 956 431). Bei dieser Verfahrensweise entstehen als unerwünschte Nebenprodukte meist Methylchlorid oder Methylbromid. Beides sind leicht flüchtige toxische Verbindungen, die aus Umweltschutzgründen - relativ umständlich - absorbiert werden müssen und dadurch eine Produktion erheblich erschweren.

Gegenstand der Erfindung sind organische Phosphor-Verbindungen mit 2-Hydroxyalkylphosphonsäurengruppen der allgemeinen Formel I

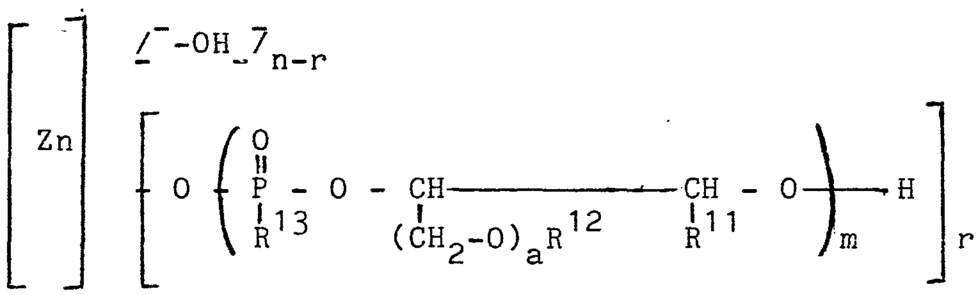

(I)

wobei die einzelnen Symbole der obigen Formel I folgende Bedeutung haben:

n ist eine ganze Zahl von 1 - 6, vorzugsweise 1 - 4;

r ist eine ganze Zahl von 1 bis n, also von 1 - 6, vorzugsweise die gleiche Zahl wie n;

m ist 1, wenn r  n ist oder eine Zahl von 1 bis 150, bevorzugt 2 bis 10, wenn r = n ist;

a ist 0 oder 1;

$R^{11}$ ist ein gegebenenfalls ungesättigter und/oder verzweigter Alkylrest mit 1 - 5 Kohlenstoffatomen oder bevorzugt Wasserstoff;

$R^{12}$ ist ein gegebenenfalls ungesättigter und/oder verzweigter Alkylrest mit 1 - 22, bevorzugt 1 - 3 Kohlenstoffatomen, der gegebenenfalls durch 1 oder zwei Chlor- oder Bromatome substituiert sein kann, ein Cycloalkylrest mit 6 - 10 Kohlenstoffatomen, ein Aryl- bzw. Aralkylrest mit bis zu 18 C-Atomen, wie vor allem

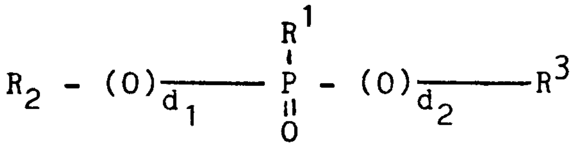

$Z_{n,1}$

in denen

$d_1$, $d_2$ unabhängig voneinander 0 oder 1 und

$R^1$ Alkyl-, Hydroxyalkyl-, gegebenenfalls $(C_1-C_2)$-alkyliertes bzw. -dialkyliertes Aminoalkyl, Halogen-(vorzugsweise Cl-)alkyl mit 1 bis 3 C-Atomen, Alkenyl mit 2 oder 3 C-Atomen oder Phenyl, das gegebenenfalls durch 1 oder 2 Halogenatome, vorzugsweise Cl, Br substituiert sein kann, sind und

$R^2$, $R^3$ das gleiche wie $R^1$ bedeuten mit der Einschränkung, daß mindestens einer der Reste $R^2$ oder $R^3$ ein Alkylenrest mit 2 - 5 C-Atomen ist,

oder phosphorhaltige Reste der allgemeinen Formel

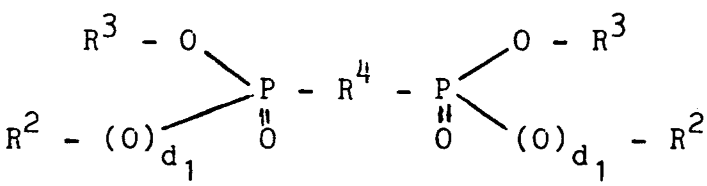

$Z_{n,2}$

in der $d_1$, $R^2$, $R^3$ Bedeutungen wie in $Z_{n,1}$ haben und $R^4$ einen geradkettigen oder verzweigten $(C_1-C_6-)$Alkylen-, Phenylen-, Xylylen-Rest oder einen Rest

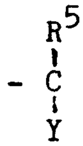 mit Y = OH, $NH_2$ und $R^5$ $(C_1-C_3-)$Alkyl bedeuten,

oder phosphorhaltige Reste der allgemeinen Formel

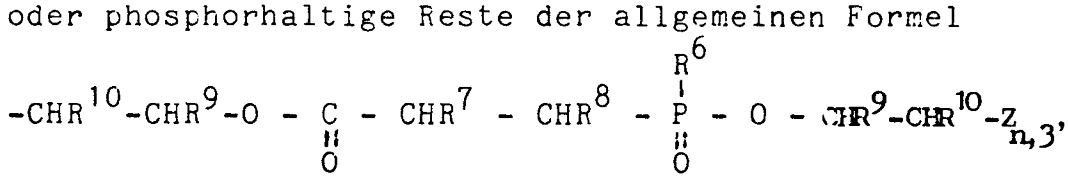

in denen

$R^6$ eine $(C_1-C_4)$-Alkylgruppe, die gegebenenfalls durch Halogen, insbesondere Chlor, substituiert, vorzugsweise einmal substituiert sein kann, eine Cycloalkylgruppe mit bis zu 8 C-Atomen, insbesondere Cyclopentyl, Cyclohexyl, eine Alkylengruppe mit bis

zu 4 C-Atomen, insbesondere Vinyl und Allyl, eine Phenyl- oder Benzylgruppe, die gegebenenfalls durch Halogen, vorzugsweise Chlor und/oder Brom, substituiert, vorzugsweise 1- bis 3-mal substituiert sein kann,

$R^7$ Wasserstoff oder eine $(C_1-C_4)$-Alkylgruppe, bevorzugt Methyl,

$R^8$ Wasserstoff oder eine $(C_1-C_2)$-Alkylgruppe, bevorzugt Methyl, wobei mindestens einer der Reste $R^7$, $R^8$ Wasserstoff ist,

$R^9$ Wasserstoff, Methyl, Chlormethyl,

$R^{10}$ Wasserstoff, Methyl oder Äthyl, vorzugsweise Wasserstoff bedeuten.

2. Verfahren zur Herstellung von Phosphor-Verbindungen gemäß Anspruch 1, dadurch gekennzeichnet, daß man 1 Mol einer Verbindung der allgemeinen Formel II

$$Z_n(OH)_n \qquad \text{(II)}$$

mit 1 bis n.25 Molen von in 2-Stellung substituierten 2-Oxo-1,3,2-dioxa-phospholanen der allgemeinen Formel III

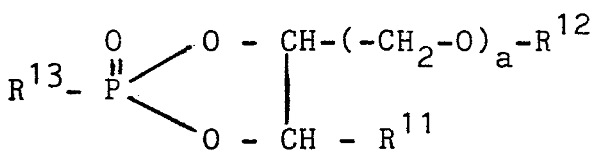

(III)

umsetzt, wobei n, a, $R^{11}$, $R^{12}$, $R^{12}$ und Z die in Anspruch 1 angegebene Bedeutung haben.

3. Verwendung der Phosphor-Verbindungen gemäß Anspruch 1 als Flammhemmittel für Textilmaterial.

in denen

$R^6$ eine $(C_1-C_4)$-Alkylgruppe, die gegebenenfalls durch Halogen, insbesondere Chlor, substituiert, vorzugsweise einmal substituiert sein kann, eine Cycloalkylgruppe mit bis zu 8 C-Atomen, insbesondere Cyclopentyl, Cyclohexyl, eine Alkylengruppe mit bis zu 4 C-Atomen, insbesondere Vinyl und Allyl, eine Phenyl- oder Benzylgruppe, die gegebenenfalls durch Halogen, vorzugsweise Chlor und/oder Brom, substituiert, vorzugsweise 1- bis 3-mal substituiert sein kann,

$R^7$ Wasserstoff oder eine $(C_1-C_4)$-Alkylgruppe, bevorzugt Methyl,

$R^8$ Wasserstoff oder eine $(C_1-C_2)$-Alkylgruppe, bevorzugt Methyl, wobei mindestens einer der Reste $R^7$, $R^8$ Wasserstoff ist,

$R^9$ Wasserstoff, Methyl, Chlormethyl,

$R^{10}$ Wasserstoff, Methyl oder Äthyl, vorzugsweise Wasserstoff bedeuten.

Die Verbindungen der Formel I werden durch eine sogenannte Phosphono-1,2-alkoxylierung erhalten, in dem man 1 Mol einer Verbindung der allgemeinen Formel II

$$Z_n(OH)_n \qquad (II)$$

mit 1 bis n.20 Molen von in 2-Stellung substituierten 2-OXO-1,3,2-dioxa-phospholanen der allgemeinen Formel II

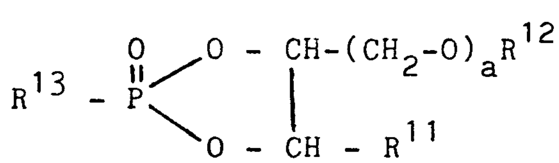

(III)

umsetzt, wobei n, a, Z, $R^{11}$, $R^{12}$ und $R^{13}$ die oben angegebenen Bedeutungen haben.

Die Alkohole der Formel II $Z_n(-OH)_n$ sind alle nach bekannten Methoden zugänglich. Von den einsetzbaren einwertigen organischen Hydroxylverbindungen mit n = 1 kommen z.B. alle

leicht zugänglichen aliphatischen geradkettigen und verzweigten Alkohole mit 1 bis 22 C-Atomen in Betracht. Als Wichtigste seien z.B. genannt: Methanol, Äthanol, n-Propanol, i-Propanol, n-Butanol, sec.-Butanol, n-Hexanol, 2-Äthyl-butanol-1, n-Octanol, 2-Äthyl-hexanol-1, n-Dodecanol, n-Hexadecanol, n-Octadecanol, wobei die Alkohole mit 1 bis 4 C-Atomen bevorzugt sind. Noch besser als monofunktionelle Alkohole sind mehrwertige mit n = 2 - 6 geeignet.

Von den mehrwertigen aliphatischen Polyolen mit n = 2 - 6 seien z.B. genannt: Äthylenglykol, 1,2-Propylenglykol, 1,3-Propylenglykol, 1,4-Butandiol, Neopentylglykol, 1,6-Hexandiol, Glyzerin, Trishydroxymethyläthan, Trishydroxymethylpropan, Pentaerythrit, Sorbit, Mannit. Insbesondere sind Glyerzin und Pentaerythrit geeignet.

Von ungesättigten Alkoholen seien z.B. genannt: n-Buten-2-ol-1, 1,4-Buten-diol und Allylalkohol, wobei 1,4-Buten-diol als zweiwertiger Alkohol bevorzugt ist.

Von den zahlreichen Verbindungen, bei denen in einem aliphatischen Kohlenwasserstoffrest eine oder mehrere $-CH_2$-Gruppen durch Ätherbrücken -O- ersetzt sind, sind z.B. geeignet die Umsetzungsprodukte von einwertigen Alkoholen mit einem oder mehreren Molekülen von Alkylenoxiden oder Alkylencarbonaten, wie z.B. 2-Methoxyäthanol, 2-Äthoxyäthanol, 2-n-Butoxy-äthanol, 2-(2'-Äthyl-hexyloxy)-äthanol, 2-n-Dodecyloxy-äthanol, ferner die Umsetzungsprodukte von 1 Mol Methanol, 1 Mol Äthanol oder 1 Mol Isopropanol und 2 Mol Äthylenoxid oder Alkylencarbonat sog. Methyldiglykol, Äthyldiglykol bzw. Isopropyldiglykol, ferner Umsetzungsprodukte von 3 bis 100 Molekülen Äthylenoxid oder Äthylencarbonat mit 1 Mol Methanol, Äthanol, Isobutanol, Dodecanol, Oleylalkohol etc.

Geeignete Umsetzungsprodukte von Äthylenoxid und zweiwertigen Alkoholen sind z.B. sog. Diglykol, sog. Triglykol und die höheren Umsetzungsprodukte von Äthylenoxid und/oder

Äthylencarbonat mit Wasser oder Äthylenglykol, die sog. Polyäthylenglykole verschiedener Molekülgrößen bis zum mittleren Molekulargewicht von 8000, insbesondere Diglykol und Triglykol, ferner sind geeignet z.B. die Addukte von 1 - 150 Molekülen Äthylenoxid und/oder Äthylencarbonat mit drei- oder höher-wertigen Alkoholen (n = 3-6), wie z.B. Glyzerin, Trishydroxymethylpropan, Pentaerythrit etc.

Neben Umsetzungsprodukten von Äthylenoxid und/oder Äthylencarbonat an ein- oder mehrwertige Alkohole kommen auch Umsetzungsprodukte aus ein- und mehrwertigen Alkoholen mit anderen 1,2-Alkylenoxiden und/oder 1,2-Alkylencarbonaten, wie vor allem 1,2-Propylenoxid, 1,2-Propylencarbonat oder Epichlorhydrin, in Betracht, ebenso die Umsetzungsprodukte von Äthylenoxid und/oder Äthylencarbonat mit Poly-1,2-propylenglykolen, die wie bekannt als oberflächenaktive Verbindungen in großer Variationsbreite hergestellt werden. Besonders erwähnt seien entsprechende Poly-1,2-propylenglykole und entsprechende Addukte von Äthylenoxid und/oder Äthylencarbonat an (Poly)-1,2-propylenoxide mit Molgewichten bis zu 8000, bevorzugt bis zu 4000.

Neben -O-Brücken kann die Kohlenwasserstoffkette von aliphatischen Hydroxylverbindungen auch durch andere Heteroatome, wie z.B. durch die Elemente N, S und/oder P oder Carbonsäureestergruppen unterbrochen bzw. substituiert sein. Diese Verbindungen können z.B. besonders einfach durch Umsetzung von einem oder mehreren Molekülen von 1,2-Alkylenoxiden und/oder 1,2-Alkylencarbonaten mit Ammoniak, primären oder sekundären Aminen, Schwefelwasserstoff, Markaptanen und mit Sauerstoffsäuren des Phosphors, ($C_2$-$C_6$)-Carbonsäuren bzw. Dicarbonsäuren erhalten werden.

Von deren Umsetzungsprodukten mit 1,2-Alkylenoxiden bzw. 1,2-Alkylencarbonaten seien z.B. genannt:

Mit N im Molekül: Monoäthanolamin, Diäthanolamin, 1-Aminon-Butanol-4, tertiäre Alkanolamine, wie z.B. Triäthanol-amin, Methyldiäthanolamin, n-Butyl-diäthanolamin, Tetrahydroxyäthyläthylendiamin, Pentahydroxyäthyl-diäthylentriamin, n-Dodecyldiäthanolamin, Dimethyläthanolamin, n-Butylmethyl-äthanolamin, Di-n-butyl-äthanolamin, n-Dodecylmethyl-äthanolamin und entsprechend höhere Umsetzungsprodukte dieser tertiären Amine mit bis zu 150 Molen Äthylenoxid bzw. Äthylcarbonat oder Propylenoxid bzw. Propylencarbonat.

Mit S im Molekül: Bis-(2-hydroxyäthyl)-sulfid, Bis-(2-hydroxypropyl)-sulfid, Bis-(2-hydroxyäthyl)-sulfon und ihre Umsetzungsprodukte mit weiterem Äthylenoxid bzw. Äthylencarbonat oder Propylenoxid bzw. Propylencarbonat bis zu Molgewichten von 8000.

Mit P im Molekül: Neutrale Umsetzungsprodukte von 1,2-Alkylenoxiden wie Äthylenoxid, Propylenoxid, Epichlorihydrin, vor allem Äthylenoxid, bzw. z.B. Äthylencarbonat mit ein- oder mehrwertigen Alkanphosphonsäuren mit 1 bis 18 C-Atomen, wie z.B. mit n-Butan-, Isobutan-, 2-Äthyl-hexan-, n-Octan-, Decan-, Dodecan-, Tetradecan-phosphonsäure, insbesondere aber mit Methan-, Äthan-, Propan- und Vinylphosphonsäure und 1,2-Äthandiphosphonsäure, ferner mit ein- oder mehrwertigen Dialkyl-phosphinsäuren, wie z.B. Methyl-butyl-phosphinsäure, Methyl-n-octyl-phosphinsäure, Methyl-n-dodecylphosphinsäure und besonders Dimethyl-, Äthyl-methyl-, Methyl-propyl-, Methyl-vinyl-phosphinsäure und Äthan-1,2-bis-(methyl-phosphinsäure) und ferner auch Umsetzungsprodukte von 1 bis 7 Mol Alkylenoxid bzw. Äthylencarbonat mit einwertigen aliphatischen Carbonsäuren, wie z.B. Crotonsäure, vor allem Essigsäure, Propionsäure, Buttersäure und mehrwertige aliphatische Carbonsäuren, wie z.B. Bernsteinsäure und Adipinsäure.

Neben derartigen durch Oxalkylierungsreaktionen sehr leicht zugänglichen Hydroxylverbindungen mit Heteroatomen N, S und P sind noch zahlreiche weitere Verbindungen mit Hydroxylgruppen und gegebenenfalls diesen Heteroatomen und/oder Carbonsäureestergruppen in der Kohlenwasserstoffkette

geeignet, von denen nur genannt seien z.B. Oligo-Kondensate, die entstehen durch Umsetzung von Dicarbonsäuren mit mehrwertigen Alkoholen, ferner Glykolsäuremethylester, 2-Hydroxyäthan-carbonsäureäthylester etc.

Geeignet sind außerdem z.B. Hydroxymethan-phosphonsäuredimethylester, 2-Hydroxyäthan-phosphonsäurediäthylester, 3-Hydroxypropan-phosphonsäure-di-n-butylester etc. und analoge Verbindungen aus der Phosphinsäurereihe, wie z.B. Hydroxymethyl-methyl-phosphinsäure-methylester, 2-Hydroxyäthyl-methyl-phosphinsäure-äthylester, 3-Hydroxypropyl-methyl-phosphinsäure-2'-äthyl-hexylester, Hydroxymethyldimethyl-phosphinoxid, 2-Hydroxyäthyl-dimethyl-phosphinoxid.

Alle genannten und nicht genannten analogen aliphatischen Hydroxylverbindungen können durch die Halogenatome Chlor, Brom, Fluor, besonders durch Chlor oder Brom, substituiert sein. Erwähnt seien z.B. die leicht zugänglichen und wegen ihres günstigen Flammschutzverhaltens interessanten Verbindungen 2-Bromäthanol, 2,3-Dimbrompropanol-1, 2,3-Dibrombutandiol-1,4, Dibrombernsteinsäure-bis-(2-hydroxyäthyl)-ester, 2,3-Dibrompropan-phosphonsäure-bis-(2-hydroxy-äthyl)-ester, 2-Hydroxyäthanphosphonsäure-bis-(2,3-dibrompropyl)-ester, ferner Chloräthanol, 2,3-Dichlor-propanol-1, 1,3-Dichlor-propanol-2, 2,3-Dichlor-butandiol-1,4- 2-Hydroxyäthanphosphonsäure-bis-(2,3-dichlorpropyl)-ester, 1-Chlorvinyl-phosphonsäure-bis-(2-hydroxyäthyl)-ester, etc.

Sehr mannigfaltig ist auch die Auswahl der geeingeten äthergruppenhaltigen aromatischen Verbindungen, die n-OH-Reste tragen. Es kommen in Betracht alle Oxalkylierungsprodukte von sogenannten Phenolen im weiteren Sinne, wie z.B. Phenol, Brenzcatechin, Resorcin, Hydrochinon, Pyrogallol, Oxyhydrochinon, Phloroglucin, die verschiedenen Tetra- und Pentahydroxybenzole, Hexaoxybenzol, -Naphthol, ß-Naphthol, ferner von Hydroxynaphthalinen mit mehr als einer Hydroxylgruppe, wie z.B. 1,2-, 1,3-, 1,4-, 1,5-, 1,6-, 1,7-, 1,8-, 2,3-Dihydroxy-naphthalin, ferner 4-Hydroxydiphenyl, 4,4'-Dihydroxy-diphenyl und - wegen des günstigen Preises - vor allem von 2,2-Bis-(4-hydroxyphenyl)-propan)- und 4,4'-Bis-(4-hydroxy-phenyl)-methan mit Molen bis zu 8000. Auch die Oxalkylate teilverätherteter mehrwertiger aromatischer Hydroxylverbindungen, wie z.B. Hydrochinon-monomethyläther, Resorcinmono-äthyläther etc., sind geeinget.

Wegen der günstigen Beeinflussung der Flammschutzeigenschaften sind aromatische Chlor- und besonders Bromohydroxy-Verbindungen von besonderem Interesse, wie z.B. die 2-Hydroxy-äthyläther von 2,4,6-Tribrom-phenol, Pentabromphenol, 2,4,6-Trichlor-phenol oder Pentachlorphenol und von 2,2-Bis-(4-hydroxy-3,5-dibromphenyl)-propan.

Geeignet sind ferner die Oxalkylate aromatischer Hydroxyverbindungen mit Alkyl-Seitengruppen mit insgesamt bis zu 18 C-Atomen, wie z.B. von o-, m- bzw. p-Kresol, Thymol, 4-tert.-Butyl-phenol, n-Nonylphenol, Isotridecylphenol mit Molegewichten bis zu 8000.

Unter den araliphatischen und aromatischen Verbindungen sind ferner geeignet alle araliphatischen Verbindungen mit alkoholischen Hydroxylgruppen, wie z.B. Benzylalkohol und alle 2-Hydroxyalkyl-ester, die durch Oxalkylierungen von aromatischen Verbindungen, die freie Carbonsäure-, Phosphonsäure oder Phosphinsäurereste enthalten, entstehen.

Zur Herstellung von aromatischen Ausgangsmaterialien II mit alkoholischen Hydroxylgruppen kommen außer den bereits aufgeführten aromatischen Verbindungen mit phenolischen Hydroxylgruppen für die Umsetzung mit 1,2-Alkylenoxiden oder 1,2-Alkylencarbonaten daher vor allem z.B. aromatische Mono- und Dicarbonsäuren, wie z.B. Benzoesäure, Phthalsäure, Isophthalsäure, Terephthalsäure, 1-Naphthalincarbonsäure, 2-Naphthalincarbonsäure, die diversen Naphthalindicarbonsäuren, aber auch aromatische Hydroxycarbonsäuren wie z.B. die drei verschiedenen Hydroxy-benzoesäuren, die verschiedenen Naphthol-carbonsäure, 4,4'-Diphenyl-dicarbonsäure etc.

0003599

in Betracht.

Ebenso sind z.B. alle anderen Brom, Chlor oder Fluor enthaltenden aromatischen Carbonsäuren, die sich von Benzol und Naphthalin ableiten, wie vor allem z.B. Tetrabrom bzw. Tetrachlorphthalsäure geeignet.

Ebenso können aromatische Phosphon- bzw. Phosphinsäuren, wie z.B. Benzolphosphonsäure, 1,3- bzw. 1,4-Phenylen-di-phosphonsäure, Phenyl-methyl-phosphinsäure, 1,3- bzw. 1,4-Phenylen-bis-(methyl-phosphinsäure) etc. durch Umsetzung mit den 1,2-Alkylenoxiden und/oder 1,2-Alkylencarbonaten in die entsprechenden 2-Hydroxyalkylester übergeführt werden.

Geeignete aromatische Verbindungen mit alkoholischen Hydroxylgruppen können aber auch durch vorhergehende Umsetzungen von aromatischen Aminen oder Merkapto-Verbindungen mit 1,2-Alkylenoxiden und/oder 1,2-Alkylencarbonaten erhalten werden.

An für Oxalkylierungen geeigneten aromatischen Aminogruppen enthaltenden Verbindungen seien z.B. genannt:
Anilin, Methylanilin, o-, m-, p-Phenylendiamin, die diversen o-, m-, p-Toluidine und -Anisidine, -Aminophenole, -Amino-benzoesäuren, Naphthylamine, die diversen Amino-naphthole, ferner 4,4'-Diaminodiphenylmethan, 4,4'-Benzidin, die möglichen Chlor- bzw. Bromaniline und vor allem 2,4,6-Tribromanilin etc., aber auch Phenylalkylamine, wie vor allem Benzylamin oder Methylbenzylamin und Dibenzylamin.

An aromatischen, oxalkylierbaren Merkaptoverbindungen seien z.B. angeführt:
Phenylmerkaptan, p-Toluyl-merkaptan, 1- bzw. 2-Naphthylmerkaptan etc.

Unter allen Verbindungen II mit alkoholischen Hydroxylgruppen besonders bevorzugt sind solche, die zusätzlich vernetzungsfähige methylolisierbare oder polymerisierbare Reste enthalten, wie z.B. 2-Hydroxyäthyl-carbamat, 2-Hydroxyäthyl-harnstoff, 2-Hydroxyäthyl-methacrylsäureester etc.

Man kann jeweils nur eine Verbindung unter der Formel II einsetzen, jedoch ist es auch möglich, Mischungen von mehreren Verbindungen II zu verwenden. Man erhält dann entsprechend Mischungen der Verbindungen I.

Die 2-Oxo-1,3,2-dioxa-phospholane der allgemeinen Formel III können z.B. erhalten werden aus den entsprechenden Phosphonsäuredichloriden der allgemeinen Formel IV

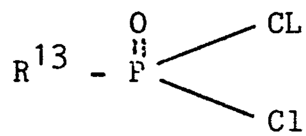
(IV)

und Diolen der allgemeinen Formel V

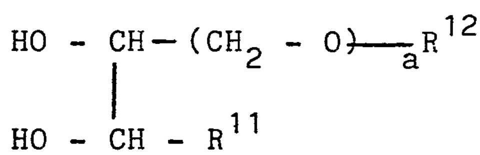
(V)

bei Gegenwart von HCl-Akzeptoren, wie vor allem z.B. von tertiären Aminen. (Vgl. z.B. DOS 2 455 700)

Es ist jedoch auch möglich, die Verbindungen II, bei denen a = 0 ist, durch Addition von 1,2-Alkylenoxiden an Phosphonsäure-anhydride zu synthetisieren. (Vgl. J. of general Chemistry of the USSR, Vol. 35, No. 4, S. 731 - 735 (1965)). Die dort nicht vorbeschriebenen Verbindungen der Formel III, bei denen a = 1 ist, die sich nicht von 1,2-Alkylenoxiden, sondern z.B. von Glyzidyl-äthern von aliphatischen Alkoholen und von Phenolen ableiten, können analog hergestellt werden.

Verbindungen mit $R^{13}_p$-Resten von der Formel $III_p$

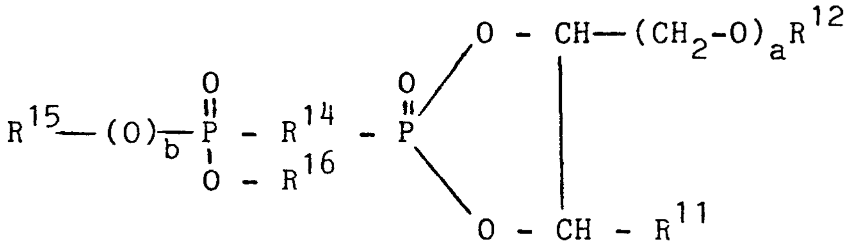

$(III_p)$

können z.B. erhalten werden durch Arbuzow-Reaktion von Verbindungen III, bei denen $R^{13}$ Brom- oder Chloralkylreste darstellen, mit Trialkylphosphiten (b = 1) bzw. Dialkylphosphonigsäureestern (b = 0).

Durch Kombination der verschiedenen variablen Reste $R^{13}$, $R^{12}$, $R^{11}$ und a ergibt sich die große Anzahl von geeigneten Verbindungen III.

Im einzelnen sind von den vielen Verbindungen der Formel III z.B. geeignet:

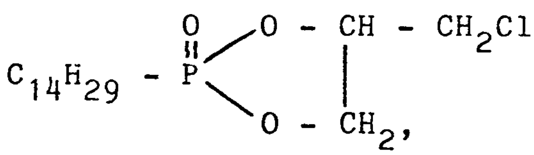

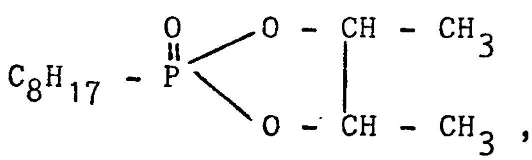

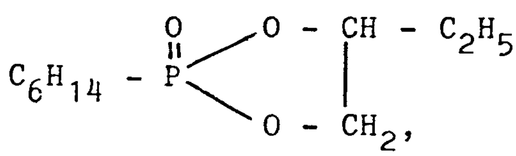

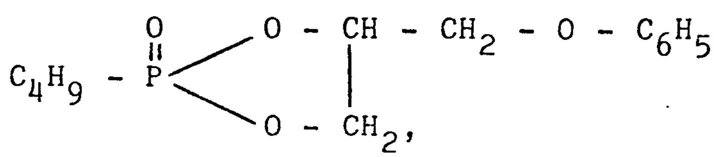

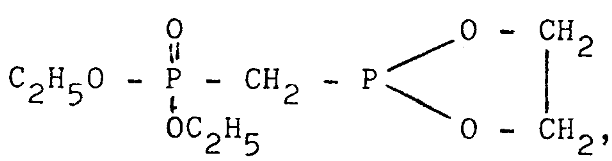

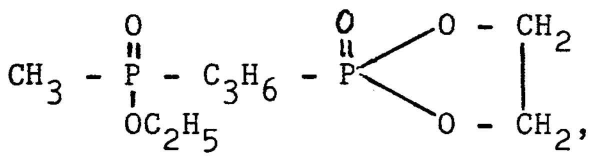

bevorzugt 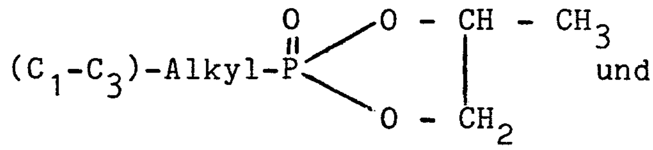 und

besonders bevorzugt 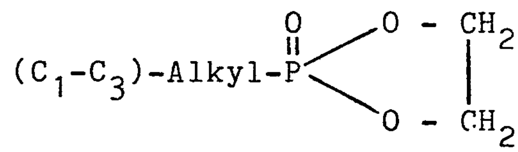

Man kann jeweils nur eine Verbindung der Formel III einsetzen, es ist jedoch auch möglich, Mischungen mehrerer Verbindungen der Formel III zu verwenden. Man erhält dann Mischungen der Verbindungen der Formel I.

Die Molverhältnisse zwischen den 2-Oxo-1,3,2-dioxa-phospholanen (III) und den Alkoholen II können - je nach dem gewünschten Phosphor- und Hydroxyl-Gruppen-Gehalt in weiten Grenzen schwanken. Sie können liegen zwischen $\frac{1}{n}$ und n.m. Dies bedeutet, daß 1 Mol eines Alkohols $Z_n(-OH)_n$ mit 1 bis m.n (bzw. 150 . n) Molen von III umgesetzt werden kann. Je mehr Mole von III pro Mol II umgesetzt werden, um so höher wird der P-Gehalt der Reaktionsprodukte und um so niedriger werden die Hydroxylgruppen-Gehalte bzw. die "Hydroxyl-Zahlen" (OHZ). Pro Hydroxylgruppe können maximal bis zu m = 150 Mole, bevorzugt m = 2 - 8 Mole III addiert werden.

Die Umsetzungen der Verbindungen II und III müssen bei Abwesenheit von Wasser durchgeführt werden. In vielen Fällen, vor allem wenn die Verbindungen II und III niedrig-viskose Flüssigkeiten sind, ist die Verwendung von Lösungsmitteln überflüssig. Wenn es sich bei den Verbindungen II und/oder III jedoch um Substanzen handelt, die bei den gewählten Reaktionstemperaturen fest sind, empfiehlt sich die Zugabe von wasserfreien, inerten relativ polaren

Lösungs- bzw. Verdünnungsmitteln, die möglichst leicht flüchtig sein sollen, wie vor allem z.B. Tetrahydrofuran, Dioxan, Aceton, 1,2-Dimethoxy-äthan, Acetonitril etc. Nach Durchführung der Umsetzungen müssen sie möglichst schonend - gegebenenfalls im Vakuum - wieder entfernt werden.

Die Reaktion kann auch bei Abwesenheit von Katalysatoren durchgeführt werden. Jedoch wirken alkalische Katalysatoren stark reaktionsbeschleunigend. Als stark alkalische Katalysatoren kommen besonders in Betracht die Alkalimetalle Lithium, Kalium und bevorzugt Natrium, Natriumamid, Natriumhydrid und bevorzugt Alkalialkoholate wie vor allem Natriumäthylat und wegen der geringen Verfärbungen Natriummethylat in Form von hochprozentigen Lösungen in Methanol. Durch Mischen von Natriummethylat-Lösung mit den Verbindungen I und Abziehen des Methanols im Vakuum bei möglichst niederen Temperaturen, können z.B. sehr bequem Alkoholate des verwendeten Alkohols II erzeugt werden, die sich als alkalische Katalysatoren hervorragend eignen. Schwach alkalische Katalysatoren, wie z.B. Soda oder Pottasche beschleunigen die Reaktion nur bei erhöhten Temperaturen von ca. 60 - 200°C.

Die Mol-Mengen an Alkalikatalysatoren richten sich besonders nach der Anzahl der Mole an Verbindungen III.

Pro Mol der Verbindung III empfiehlt sich der Einsatz von 0,002 - 0,.5 Mol, bevorzugt 0,01 bis 0,1 Mol, an Alkalikatalysatoren.

Durch Nebenreaktionen, vor allem durch Verseifung von Phosphonsäureestergruppen, wird ein Teil des Alkalikatalysators verbraucht. Um zu erkennen, ob noch ausreichende Mengen an freiem Alkali vorhanden sind, empfiehlt es sich Indikatoren, bevorzugt im Neutral-Bereich farblose Indikatoren, wie z.B. Phenolphthalein oder bevorzugt Thymolphthalein, zuzusetzen.

Falls erforderlich, kann überschüssiges freies Alkali durch Zugabe berechneter Mengen von anorganischen oder organischen Säuren bzw. Säurespendern, wie z.B. Schwefelsäure, Phosphorsäure, Äthanphosphonsäure, Essigsäure, Oxalsäure, Essigsäureanhydrid etc. nach Ende der Reaktion neutralisiert werden.

Die Reaktionstemperaturen können schwanken zwischen ca. -20°C und 200°C. Sie sind sehr abhängig von der Tatsache, ob überhaupt Alkali-Katalysatoren verwendet werden und ob das Reaktionsmedium alkalisch ist oder nicht. Bevorzugte Temperatur-Bereiche sind bei Abwesenheit von Katalysatoren 100 - 170°C, bei Anwesenheit von stark alkalischen Katalysatoren, d.h. im alkalischen Medium, 0 bis 40°C. Die Reaktionszeiten liegen bei 1 Minute bis ca. 48 Stunden, bevorzugt 5 Minuten bis 20 Stunden. Bei höheren Temperaturen, besonders bei Abwesenheit von Alkali-Katalysatoren bzw. im Neutral- und im schwach sauren pH-Bereich, sind wesentlich längere Reaktionszeitven von bevorzugt ca. 1 - 20 Stunden notwendig. Bei Gegenwart von starken Alkali-Katalysatoren genügen bevorzugt 5 Minuten bis 2 Stunden. Die Reaktion ist hierbei, besonders wenn kleine Moleküle von II und III eingesetzt werden. z.T. stark exotherm, so daß während der Zugabe von III zu II gegebenenfalls intensiv gekühlt werden muß und sich die portionsweise Zugabe der Verbindungen III zu den Mischungen aus den Alkoholen II und den entsprechenden Alkoholaten besonders empfiehlt. Es ist zwar auch möglich, die Verbindungen II und III zu mischen und Lösungen von Alkali-Katalysatoren (z.B. Natriummethylat-Lösungen in Methanol) zuzutropfen. Jedoch besteht dabei stets die Gefahr von Überhitzungen des Reaktionsgemischs und/oder (meist unerwünschter) Verseifungen erheblicher Anteile an Phosphonsäureestergruppen. Ähnliches gilt für den Fall, daß nur die 2-Oxo-1,3,2-dioxa-phospholane III vorgelegt und die Alkohole II, in Mischung oder gleichzeitig mit den Alkalikatalysatoren langsam eingetragen werden. Die Reaktion wird bei niederen Reaktionstemperaturen stets unterbrochen, wenn der pH-Wert unter ca. 5 - 7 abfällt

(gemessen mit feuchtem Indikatorpapier).

Die erhaltenen Reaktionsprodukte der Formel II sind meist farblose Öle, manchmal, z.B. bei Verwendung von längerkettigen gesättigten Fettalkoholen, aber auch pasten- bzw. wachsartig. Ihre Hydroxyl-Zahlen (= mg KOH pro Gramm) können in weiten Grenzen schwanken zwischen ca. 10 bis ca. 900, bevorzugt zwischen 40 und 300.

Bemerkenswert ist, daß bei dem bevorzugten Herstellverfahren, d.h. im alkalischen pH-Bereich, sich die Addition der Verbindungen III und die Alkohole II bereits bei relativ sehr niedrigen Reaktionstemperaturen sehr glatt und schnell vollzieht und außerdem primäre und sekundäre Aminogruppen nicht reagieren. Dadurch können auch Alkohole II zum Einsatz kommen, die beliebige Aminogruppen oder thermisch nicht belastbare Reste, wie z.B. Methacryl-, Carbamat- und Harnstoffreste etc., enthalten.

Die Verbindungen der Formel I sind wertvolle Zwischenprodukte für zahlreiche Phosphororganika. Von besonderem Interesse ist hierbei auch die Tatsache, daß durch Umsetzung mit niedermolekularen Verbindungen der Formel III auch solche Alkohole der Formel II in wasserlösliche Addukte überführt werden können, die von Natur aus, beispielsweise durch eine längerkettige Alkylgruppe, nicht wasserlöslich sind. Man kann diese Verbindungen I, vor allem, wenn sie sich von niedermolekularen, mehrwertigen oder einwertigen vernetzbaren aliphatischen Alkoholen ableiten, jedoch auch direkt als Flammhemmittel für Textilmaterial verwenden. Zu diesem Zweck werden sie mit reaktiven Vernetzungsmitteln, gegebenenfalls in Gegenwart von Vernetzungskatalysatoren, auf dem Textilmaterial nach bekannten Verfahren fixiert. Man erhält auf diese Weise einen ausgezeichneten flammhemmenden Effekt.

Solche erfindungsgemäßen Verbindungen, die endständige Hydroxylgruppen enthalten, werden mit mehrfunktionellen

N-Methylolverbindungen von Melamin, Harnstoff oder cyclischen Harnstoffverbindungen in Gegenwart von sauren Katalysatoren permanent vernetzt. Enthalten diese Verbindungen dagegen endständige Vinylgruppen, so können sie mit oder ohne andere vinylgruppenhaltige Verbindungen im Beisein eines Polymerisationskatalysators polymerisiert bzw. copolymerisiert werden. Auch die auf diese Weise erhaltenen hochpolymeren Verbindungen zeichnen sich auf verschiedenen Textilmaterialien durch eine gute Permanenz aus.

Als vernetzende mehrfunktionelle n-Methylolverbindungen kommen in Frage z.B. Derivate von Amino-1,3,5-triazinen, wie Trimethylolmelamin, Hexamethylolmelamin, Trimethylolmelamintrimethyläther, Hexamethylolmelamin-pentamethyläther, Trimethylolmelamin-triisobutyläther, Dimethylolaceto-guanamin, ferner Derivate des Harnstoffes wie Dimethylolharnstoff, Dimethylolharnstoffdimethyläther, Dimethylolharnstoffdibutyläther, Dimethylolcycloäthylenharnstoff, Dimethylolcyclopropylenharnstoff, Dimethylol-4-methoxy-5-dimethylpropylenharnstoff, Dimethylol-5-hydroxypropylenharnstoff, 1,3-Dimethylol-4,5-dihydroxy-imidazolidon-(2), 1,3-Dimethylol-5-hydroxyäthylhexahydrotriazin-on-(2), Dimethyloluron und Dimethylolcarbamate wie z.B. Dimethylolmethylcarbamat. Dimethylol-hydroxyäthylcarbamat und Dimethylolmethoxyäthylcarbamat.

Interessante Verbindungen, die sich besonders bewährt haben, sind die Melaminderivate, z.B. Trimethylolmelamintrimethyläther oder Hexamethylolmelaminpentamethyläther.

Als Katalysatoren, die im sauren pH-Bereich ihre Wirkung zeigen, werden im allgemeinen ca. 0,2 bis 5 Gew.-%, bevorzugt 0,4 bis 3 Gew.-%, anorganische oder organische Säuren zugesetzt oder deren Salze, die durch Hydrolyse oder durch eine Hitzebehandlung Säure freisetzen, wie z.B. Schwefelsäure, Salzsäure, Phosphorsäure, Trichloressigsäure, Maleinsäure, Weinsäure, Zitronensäure, Essigsäure oder deren Salze mit Ammoniak, Aminen oder mehrwertigen Metallen,

vorzugsweise Salze von starken oder mittelstarken Säuren, wie Ammoniumsulfat, Ammoniumchlorid, Mono- oder Diammoniumoxalat, Ammoniumnitrat, Magnesiumchlorid, Aluminiumchlorid, Zinkchlorid, Zinknitrat, Zinkfluoroborat, 2-Amino-2-methylpropanol-hydrochlorid.

Die Vernetzungskatalysatoren können für sich allein oder in Mischungen untereinander den Ausrüstungsflotten zugesetzt werden. Solche - bevorzugt wäßrige - Ausrüstungsflotten enthalten im allgemeinen 2 bis 5 Gew.-%, vorzugsweise 2,4-4,5 Gew.-%, von Verbindungen der Formel I, ferner 5 bis 10 Gew.-%, vorzugsweise 7 bis 9 Gew.-%, vernetzende Substanzen, wie vorstehend angegeben, ferner 0,2 bis 5 Gew.-% Vernetzungskatalysatoren, sowie gegebenenfalls 5 bis 25 Gew.-% an Hochpolymeren, bevorzugt in Form von Dispersionen.

Die gute Polymerisationsfähigkeit der erfindungsgemäßen vinylgruppenhaltigen Phosphorverbindungen ermöglicht die Polymerisation auch ohne Inertgasschutz und in Anwesenheit von Luftsauerstoff auf Textilsubstraten unter textiltechnischen Bedingungen, auch bei großer Substratfläche. Die so erhaltenen Polymerisate verleihen den verschiedensten textilen Flächengebilden einen guten Flammschutz.

Als Polymerisationskatalysatoren werden den Ausrüstungsflotten im allgemeinen Radikalspender zugesetzt, es ist jedoch auch möglich, z.B. während der Behandlung mit energiereichen Strahlen Radikale auf dem Fasermaterial zu erzeugen.

Als Polymerisationskatalysatoren werden die für die Polymerisation von Acrylaten bekannten Verbindungen verwendet, also für wäßrige Ausrüstungsflotten z.B. Kalium- oder Ammonium-peroxidisulfat (-persulfat), Wasserstoffperoxid oder Wasserstoffperoxidspender wie $NH_4P_2O_7.H_2O_2.H_2O$ oder $(NH_2CQNH_2).H_2O$ (in den Beispielen als Carbamid-Wasserstoffperoxid bezeichnet), ferner auch Redoxkatalysator-Systeme, wie Wasserstoffperoxid und Ascorbinsäure oder Natriumbisulfit, Mangan(II)chlorid oder Eisen(II)chlorid oder Natriumbisulfit, Natriumchlorat/Natriumbisulfit, Natriumcarbonat/Natriumbisulfit.

Zur Erhöhung der Permanenz, insbesondere der Waschbeständigkeit des erfindungsgemäß erhaltenen Flammschutzes ist es von besonderem Vorteil, den Monomeren der Formel I weitere Comonomere zuzusetzen, insbesondere solche, die vernetzend wirken. Beispiele für solche Comonomere sind vor allem Acrylamid, N-Methylol-acrylamid, Methylenbisacrylamid, N-Methylol-methylenbisacrylamid, N,N'-Dimethylol-methylenbisacrylamid, N-Formamidomethyl-acrylamid, Divinylbenzole, Triallylcyanursäureester, Imide und Anhydride der Acrylsäure und Methacrylsäure, 1,3,5-Trisacryloyl-hexahydro-1,3,5-triazin.

Verwendet man -C=C-gruppenhaltige Comonomere, die noch andere reaktionsfähige Gruppen besitzen, z.B. Acrylamid oder N-methylolhaltige Verbindungen wie z.B. N-Methylol-methylenbisacrylamid, N,N'-Dimethylolmethylenbisacrylamid, so können noch weitere bzw. zusätzliche Vernetzungskomponenten dem System zugesetzt werden, wie z.B. Derivate von Amino-1,3,5-triazinen wie Trimethylolmelamin, Hexamethylolmelamin, Hexamethylolmelamin-pentamethyläther, ferner Derivate des Harnstoffes, wie Dimethylolharnstoff, Dimethylolharnstoffdimethyläther, Di-Dimethylolcycloäthylenharnstoff, Dimethylolcyclopropylenharnstoff, Dimethylolcarbamate, z.B. Dimethylolmethylcarbamat, Dimethyloläthylcarbamat etc.

Insgesamt betragen diese Zusätze zu den Monomeren der Formel I 10 - 300 Gew.-Teile, vorzugsweise 30 bis 180 Gew.-Teile, insbesondere 40 - 120 Gew.-Teile auf 1000 Gew.-Teile Substrat.

Das textile Fasergut, auf dem die flammhemmenden Ausrüstungen nach den oben beschriebenen Vernetzungsmöglichkeiten, sowohl nach dem Kondensations- als auch nach dem Polymerisationsverfahren, durchgeführt werden kann, ist verschieden. Es kommen Gewebe, Gewirke, Non-woven-fabrics, z.B. Nadelvliese für Wand- und Bodenbeläge und Tufting- bzw. Wepteppiche in Frage. Gewebe bzw. Gewirke können aus nativen oder regenerierten Cellulosefasern oder aus Synthesefasern oder deren Mischungen bestehen, Non-woven-fabrics aus Cellulose- oder Synthesefasern, z.B. Nadelvliesauslegeware aus 100 % Polyamid 6-Fasern, aus Polyester/Polyamidfasern 50/50 oder solche, die einen Polyesterkern (Unterseite) besitzen und eine Lauffläche aus Polyamid 6-Fasern, Polyamidfasern und Viskose-Zellwolle 50/50, Polyesterfasern und Viskose-Zellwolle 50/50. und Polyesterfasern 100 %ig.

Gute permanente Flammschutzeffekte werden auch auf Fasergut erzielt, das aus 100 % Polypropylenfasern oder auch Polypropylenfaser-Mischgut z.B. mit Polyester- oder Polyamid- oder Cellulosefasern besteht.

Überraschenderweise wurden auch sehr gute flammhemmende Effekte erzielt, wenn man die flammhemmenden phosphororganischen Verbindungen mit den vorgenannten Vernetzungsprodukten und Katalysatoren in eine Vorstrichimprägnierflotte bei Tufting-Teppichen oder in eine Rückenappreturflotte für Webteppiche einbaut. Das Grundgewebe der Tufting-Teppiche kann aus Baumwolle, Jute, Zellwolle, Wolle oder Synthesefasern auf Basis Polyamid, Polyester, Polypropylen oder in Mischung, oder aus Glasfasern bestehen. Vernadelte Vliesstoffe aus Polyester oder Polypropylenfasern eignen sich ebenfalls ausgezeichnet als Grundgewebe. Der getuftete Flor (Schlingen- oder Schnittflor) kann aus Polyamid-, Polyester-, oder aus Polyacrylnitrilfasern bestehen. Mischungen aus Polyacrylnitrilfasern mit z.B. 20 % Polyesterfasern haben sich ebenfalls gut bewährt.

Zur Griffgestaltung, zur Erzielung einer guten Formbeständigkeit, zur Verbesserung des Abriebs und der Trittfestigkeit von Nadelvliesauslegeware werden den Ausrüstungsflotten hochpolymere Kunststoffdispersionen zugesetzt.

Die Einbidnung der Florfäden bei einer Tuftedware in das oben beschriebene Grundgewebe erfolgt durch den sogenannten Vorstrich mit hochpolymeren Kunststoffdispersionen, denen die erfindungsgemäßen flammhemmenden Komponenten, Vernetzer und Katalysatoren zugesetzt werden.

Als Kunststoffdispersionen kommen in Frage Polyvinylacetat, Polyvinylacetat mit Kunststoffweichmachern, wie Dibutylphthalat, Misch-Polymerisate von Vinylacetat mit Maleinsäuredibutylester, Mischpolymerisate von Acrylsäurebutylester mit N-Methylolacrylamid, Mischpolymerisate von Acrylsäurebutylester, N-Methylolacrylamid und Acrylsäure, Mischpolymerisate von Acrylsäurebutylester, N-Methylolacrylamid und/oder N-Methylolmethacrylamid und Acrylsäure, Mischpolymerisate von Acrylsäurebutylester, Methacrylsäuremethylester und Methylolmethacrylamid, Mischpolymerisate von Acrylsäurebutylester, Acrylnitril, N-Methylolacrylamid und Methacrylsäure, Mischpolymerisate von Acrylsäurebutylester, Acrylnitril, N-Methylolmethacrylamid und Acrylsäure, Mischpolymerisate von Acrylsäurebutylester, Styrol, Acrylnitril und N-Methylolmethacrylamid, Mischpolymerisate aus N-Methylolmethacrylamid und Butandioldiacrylat, Acrylsäuremethylester und Acrylsäurebutylester, Mischpolymerisate von Äthylacrylat, Acrylnitril und N-Methylolacrylamid, Mischpolymerisate von Butylacrylat, Vinylacetat mit N-Methylolacrylamid, Mischpolymerisate von Butylacrylat, Acrylnitril und N-Methylolacrylamid, Mischpolymerisate von Styrol, Butylacrylat und Acrylsäure, Naturlatex oder Syntheselatices aus Styrol mit Butadien.

Bevorzugte Polymerdispersionen sind Polyvinylacetat-Dispersionen (50 %ig), Mischpolymerisate von Vinylacetat mit Maleinsäuredibutylester z.B. im Verhältnis 77/23 (ca.50%ig), Mischpolymerisate von Styrol/Butylacrylat/Acrylnitril/Methacrylsäure/Acrylamid z.B. im Verhältnis 16:61:25:2:1 oder 25:53;25:2:1, Mischpolymerisate von Äthylacrylat/Acrylnitril/N-Methylolacrylamid 6:3:1, Mischpolymerisate von Butylacrylat/Vinylacetat/N-Methylolacrylamid 35:55:10,

ferner Pfropfpolymerisate (Partiell verseift) wie 50 % Polyvinylalkohol, 25 % Polyvinylacetat, 25 % Polyäthylen oder Butadien-Styrol-Latex (ca. 50 %) z.B. im Verhältnis 40:60, 60:40 oder 35:60 + 3,5 Acrylsäure.

Derartige Kunststoffdispersionen werden auch als Rückenappretur bei Webteppichen für die griffgebende Verfestigung des Teppichs benutzt.

Bei Tufted-Teppichen erfolgt im allgemeinen anschließend noch eine Rückenbeschichtung mit Naturlatex, Syntheselatex-Dispersion z.B. auf Basis Butadien-Styrol 40:60 oder 60:40.

Der Verdicker hat bekanntlich den Zweck, die Appreturen physikalisch in einen Zustand zu versetzen, der es erlaubt, daß die Imprägnierflotte bei der Applikation nicht in die Polfäden durchschlägt und diese verklebt. Als Verdickungsmittel sind geeignet wasserlösliche Hydroxyäthylcellulosen, Methylcellulosen, Carboxymethylcellulosen, wasserlösliche Stärkeprodukte, teilverätherte oder verätherte Stärkeprodukte, Polyvinylalkohole, die Natrium- oder Ammoniumsalze der Alginsäure.

Der Vorstrich oder auch die Teppichrückenbeschichtung für Webteppiche kann außerdem wie üblich mit Kreide gefüllt werden.

Die Durchführung der erfindungsgemäßen Verfahren zur flammhemmenden Ausrüstung von Geweben, Gewirken, Non-woven-fabrics und Tufting- oder Webteppichen erfolgt unter Applikationsbedingungen, wie sie in der Textilindustrie üblich sind. Ein zusätzlicher Arbeitsgang ist nicht nötig.

Die Applikation der flammhemmenden Ausrüstungsflotten kann durch eine Foulardbehandlung, durch Rakeln oder Pflatschen erfolgen. Sie hängt vom Textilgut ab. Gewebe oder Gewirke werden im allgemeinen einer Foulardbehandlung unterworfen. Nadelvliese können sowohl am Foulard als auch mittels

Rakel- oder Pflatschausrüstung behandelt werden.

Die Vorstrichimprägnierflotte oder die Rückenappretur für Webteppiche wird mit Hilfe einer Luftrakel, einer Gummituchrakel oder Zylinderrakel aufgebracht.

Anschließend wird getrocknet bzw. kondensiert. Die Baumwollgewebe werden zunächst einer Vortrocknung bei 80 - 120°C unterworfen und anschließend 4 - 5 Minuten bei 140 - 160°C kondensiert. Nadelvlies bzw. Tufting- oder Webteppiche werden bei 130 - 150°C getrocknet.

Den Ausrüstungsflotten können weitere Veredlungsmittel wie textile Weichmacher, Hydrophobierungsprodukte, Oleophobierungsmittel oder auch antimikrobielle Ausrüstungsprodukte zugesetzt werden.

Herstellungs-Beispiele

(Es gilt allgemein: Die gefundenen Hydroxyl-Zahlen liegen wegen Nebenreaktionen, Verunreinigungen und Katalysatoren stets höher als die berechneten.
MV bedeutet Mol-Verhältnis zwischen den Verbindungen II und III.
P-ODOP = 2-Propyl-2-oxo-1,3,2-di-oxa-phospholan)

Beispiel 1

a) (MV = 6,67, n = r = 1, m = 6,67)

26,8 g (0,1 Mol) Oleylalkohol werden bei Gegenwart von etwas Thymolphthalein-Indikator mit 2,4 g (0,015 Mol $NaOCH_3$) einer 33 %igen Lösung von Natriummethylat in Methanol vermischt. Bei 30°C wird im Vakuum (1 Torr) das Methanol abgezogen und bei ca. 5 - 10°C unter ständiger Kühlung in 50 Minuten 100,0 g (0,667 Mol) 2-Propyl-2-oxo-1,3,2-dioxa-phospholan zugetropft. Das Reaktionsgemisch bleibt während des Zutropfens tiefblau

und entfärbt sich erst nach längerem Stehen bei Raumtemperatur.

Es resultieren 128 g eines schwach gelb gefärbten Öls mit der Säure-Zahl 1 und der gefundenen Hydroxyl-Zahl 47. $P_{gef.}$ = 15,9 % ($P_{ber.}$ = 16,1 %). Es ist wasserlöslich und schäumt schwach. Eine frischbereitete 1 %ige wässrige Lösung zeigt bei 70°C einen Trübungspunkt.

b) (MV = 4,0, n = r = 1, m = 4,0)

Es wird gearbeitet wie in Beispiel 1a. Es werden aber nur 60,0 g (0,4 Mol) P-ODOP zugetropft. Es resultieren 88 g eines gelblichen Öls mit der Hydroxyl-Zahl 57. $P_{gef.}$ = 13,8 % ($P_{ber.}$ = 14,1 %). Eine 1 %ige wässrige Lösung zeigt bei 64°C einen Trübungspunkt.

c) (MV = 2,0; n = r = 1, m = 2)

26,8 g (0,1 Mol) Oleylalkohol werden nur mit 1,2 g (0,0075 Mol $NaOCH_3$) einer 33 %igen Natriummethylat-Lösung in Methanol vermischt und nur 30,0 g (0,2 Mol) P-ODOP zugetropft. Ansonsten wird gearbeitet wie in Beispiel 1a. Es resultieren 57 g eines gelblichen Öls, das eine Hydroxyl-Zahl von 91 aufweist. $P_{gef.}$ = 10,7 % ($P_{ber.}$ = 10,9 %). Der Trübungspunkt der 1 %igen wässrigen Lösung liegt bei 55°C.

d) (MV = 1,0; n = r = 1, m = 1)

Zu 26,8 g (0,1 Mol) Oleylalkohol kommen nur 0,6 g (0,0037 Mol $NaOCH_3$) einer 33 %igen Natriummethylat-Lösung in Methanol. Es werden nur 15,0 g (0,1 Mol P-ODOP zugetropft. Ansonsten wird analog Beispiel 1a gearbeitet. Es resultieren 42 g eines gelblichen Öls von der Hydroxyl-Zahl 120. $P_{gef.}$ = 7,2 % ($P_{ber.}$ = 7,3 %). Die Substanz ist nur noch in viel Wasser (trüb) löslich und zeigt in 1 %iger wässriger Lösung einen (undeutlichen) Trübungspunkt bei 45°C.

Beispiel 2

a) (MV = 10,0; n = r = 1, m = 10)

In 26,4 g (0,8 Mol) Tetrahydroperfluoroctanol + Spur Thymolphthalein werden bei 50°C 0,24 g (0,01 Mol) Natriumhydrid aufgelöst. Nach Beendigung der Wasserstoff-Entwicklung werden - nach dem Abkühlen auf 25°C - innerhalb von 30 Minuten 150,1 g (1 Mol) von P-ODOP zugetropft. Beim Nachrühren verschwindet die blaue Farbe des Indikators.

Es resultieren 187 g eines schwach gelblichen Öls, das sich beim Verdünnen mit Wasser klar löst und stark schäumende Lösungen ergibt; die Hydroxyl-Zahl liegt bei 37. $P_{gef.}$ = 16,3 % ($P_{ber.}$ = 16,6 %).

b) (MV = 4,0; n = r = 1, m = 4)

Es wird analog Beispiel 2a gearbeitet. Es werden aber nur 60,0 g (0,4 Mol) P-ODOP zugetropft.

Es resultieren 96,5 g eines fast farblosen Öls von der Hydroxyl-Zahl 64.
$P_{gef.}$ = 12,6 % ($P_{ber.}$ = 12,8 %).
Das Produkt ergibt mit Wasser nur trübe Lösungen.

Beispiel 3

(MV = 2,5; n = r = 1, m = 2,5)

Zur Mischung aus 6,4 g (0,2 Mol) Methanol, einer Spur Thymolphthalein und 15 g (0,1 Mol) P-ODOP kommen bei 15°C unter Intensiv-Kühlung 0,5 g (0,003 Mol $NaOCH_3$) einer 33 %igen Natriummethylat-Lösung in Methanol. Nach Abkühlen der Reaktion werden zu der noch alkalisch tiefblauen Lösung in 20 Minuten unter weiterer Kühlung weitere 60 g (0,4 Mol) P-ODOP zugetropft. Die Lösung wird beim Nachrühren bei 25°C nach 30 Minuten farblos.

Es resultieren 82 g eines niedrig-viskosen Öls von der Hydroxyl-Zahl 25.

$P_{gef.}$ = 18,5 % ($P_{ber.}$ = 18,9 %)

$n_D^{20}$ = 1,4592

Beispiel 4

(MV 0 ca. 100; n = r = 1, m = 100)

Zu 150,1 g (1 Mol) P-ODOP, das auf -8°C gekühlt ist, kommen in einem Guß 0,5 g (0,003 Mol $NaOCH_3$ und 0,001 Mol Methanol) einer 33 %igen Natriummethylat-Lösung in Methanol. Die Temperatur steigt trotz intensiver Kühlung mit $CO_2$/Methanol auf 18°C an.

Es resultieren 150,5 g eines hochviskosen Öls mit einem P-Gehalt von 20,3 % ($P_{ber.}$ = 20,6 %) und einer gefundenen Hydroxyl-Zahl von 14.

Beispiel 5

(MV = 20; n = r = 4, m = 5)

In 150,1 g (1 Mol) P-ODOP werden bei 80°C - bei Gegenwart von etwas Thymolphthalein-Indikator - 6,8 g (0,05 Mol) Pentaerythrit gelöst. Die Lösung wird auf 15°C gekühlt. Dann werden bei dieser Temperatur unter Kühlung innerhalb von 15 Minuten 2 g (0,012 Mol $NaOCH_3$) einer 33 %igen Natriummethylat-Lösung in Methanol in der Weise zugetropft, daß die Lösung stets blau gefärbt, d.h. alkalisch bleibt.

Es entstehen 161 g eines zähen Sirups von der Hydroxyl-Zahl 71 und einem P-Gehalt von 19,0 % ($P_{ber.}$ = 19,2 %).

Beispiel 6

a) (MV = 0,75; n = im Mittel ca. 4, r = im Mittel ca. 3, m = 1)

Zu 147,4 g (1 Hydroxy-Äquivalent) eines bei der Herstellung von Polyurethan-Hartschäumen verwendbaren Addukts aus Sucrose, Glyzerin und Propylenoxid von der Hydroxyl-Zahl 380 und etwas Thymolphthalein kommen 8,0 g (ca. 0,05 Mol $NaOCH_3$) einer 33 %igen Natriummethylat-Lösung in Methanol. Im Ölpumpen-Vakuum von 2 Torr wird das Methanol bei 30°C abgezogen. Dann werden bei 20 - 25°C unter ständiger Kühlung innerhalb von 60 Minuten 112,6 g (0,75 Mol) P-ODOP zugetropft. Die Lösung bleibt dabei blau, d.h. alkalisch und entfärbt sich erst bei der Zugabe in 0,5 ml Eisessig.

Es resultieren 263 g eines farblosen Öls von der Hydroxyl-Zahl 261 und dem P-Gehalt 8,7 % ($P_{ber.}$ = 8,8 %).

b) (MV = 0,5; n = ca. 4, r = ca. 2, m = 1)

Es wird gearbeitet wie bei Beispiel 6a. Es werden aber nur 1,6 g (0,01 Mol $NaOCH_3$) einer 33 %igen Natriummethylat-Lösung verwendet und nur 75,0 g (0,5 Mol) P-ODOP zugetropft. Es entstehen 223 g eines farblosen Öls von der Hydroxyl-Zahl 277 und dem P-Gehalt 6,8 % ($P_{ber.}$ = 6,9 %).

c) (MV = 0,25; n = ca. 4, r = ca. 1, m = 1)

Es werden nur 37,5 g (0,25 Mol) P-ODOP zugetropft und ansonsten gemäß Beispiel 6b gearbeitet. Das fast farblose Öl (Ausbeute = 186 g) hat eine Hydroxyl-Zahl von 324 und einen P-Gehalt von 4,1 % ($P_{ber.}$ = 4,2 %).

d) (MV = 1,0; n = ca. 4, r = ca. 4, m = 1)

Es werden 3,3 g (0,02 Mol $NaOCH_3$) einer 33 %igen Natriummethylat-Lösung in Methanol verwendet und 150,1 g (1 Mol) P-ODOP bei 15 - 20°C innerhalb von 90 Minuten zugetropft. Ansonsten wird analog Beispiel 6a gearbeitet.

Es resultieren 295 g eines fast farblosen Öls von der

Hydroxyl-Zahl 220 und einem Phosphor-Gehalt von 10,2 % ($P_{ber.}$ = 10,4 %).

Beispiel 7

a) (MV = 12; n = r = 3, m = 4)

114,2 g (0,1 Hydroxyl-Äquivalente) eines Addukts aus Glyzerin, Propylenoxid und Äthylenoxid vom mittleren Molekulargewicht 3 500, einer Hydroxyl-Zahl von 47 und einem Anteil von 20 % an primären Hydroxylgruppen, das zur Herstellung von Polyurethan-Weichschäumen verwendet wird, und eine Spatelspitze Thymolphthalein-Indikator werden bei Raumtemperatur mit 3,3 g (0,02 Mol $NaOCH_3$) einer 33 %igen Natriummethylat-Lösung in Methanol gemischt. Im Ölpumpen-Vakuum von 1,5 Torr wird das Methanol abgezogen. Dann werden bei ca. 25°C unter leichter ständiger Kühlung 60,0 g (0,4 Mol) P-ODOP zugetropft. Dabei steigt die Viskosität des ständig alkalischen (und blau gefärbten) Reaktionsgemischs an. Nach Ende des Zutropfens wird der Indikator mit 0,5 ml Eisessig entfärbt und auf pH 6 gestellt.

Auswaage = 176 g. Das resultierende viskose Öl ist farblos, hat eine Hydroxyl-Zahl von 46 und einen Phosphor-Gehalt von 6,8 % ($P_{ber.}$ = 7,0 %).

b) (MV = 9,0; n = r = 3, m = 3)

Es wird gearbeitet wie bei Beispiel 7a. Es werden aber nur 1,6 g (0,01 Mol $NaOCH_3$) einer 33 %igen Natriummethylat-Lösung in Methanol verwendet und nur 45,0 g (0,3 Mol) P-ODOP zugetropft.

Es entstehen 160 g eines viskosen farblosen Öls von der Hydroxyl-Zahl 53 und einem Phosphor-Gehalt von 5,7 % ($P_{ber.}$ = 5,8 %).

c) (MV = 6,0; n = r = 3, m = 2)

Es wird analog Beispiel 7b gearbeitet, aber nur 30,0 g (0,2 Mol) P-ODOP zugetropft.

Es entstehen 143 g eines farblosen Öls von der Hydroxyl-Zahl 47 und dem Phosphor-Gehalt 4,2 % ($P_{ber.}$ = 4,3 %).

Beispiel 8

(MV = 4,0; n = r = 2, m = 2)

Zu 21,0 g (0,2 Mol) Diäthanolamin und etwas Thymolphthalein kommen bei Raumtemperatur 6,5 g (0,04 Mol $NaOCH_3$) einer 33 %igen Natriummethylat-Lösung in Methanol. Bei 30°C wird im Vakuum von 1,5 Torr das Methanol entfernt. Dann werden bei 5 - 12°C unter starker ständiger Kühlung 120,1 g (0,8 Mol) P-ODOP innerhalb von 50 Minuten zugetropft. Dabei tritt eine deutlich wahrnehmbare Viskositätserhöhung auf.

Auswaage = 143 g. Die gefundene Hydroxyl-Zahl des resultierenden tiefblauen (durch Indikator!) Öls liegt bei 209, der Phosphor-Gehalt bei 17,0 % ($P_{ber.}$ = 17,3 %). Durch Folge-Reaktionen, wie z.B. Acylierungen, kann nachgewiesen werden, daß die sekundäre Aminogruppe erhalten bleibt.

Beispiel 9

(MV = 3,15; n = r = 1, m = 3,15)

Zu 52,5 g (0,5 Mol) 2-Hydroxyäthyl-carbamat und einer Spatelspitze Thymolphthalein kommen 4,9 g (0,03 Mol $NaOCH_3$) Natriummethylat-Lösung in Methanol. Nach Abziehen des Methanols bei 2 Torr und 30°C werden innerhalb von 50 Minuten bei ca. 22°C unter ständiger Kühlung zunächst 36,5 g (0,243 Mol) P-ODOP zugetropft. Dabei entfärbt sich die Lösung und verliert ihre Alkalität. Nach Zugabe von weiteren

4,9 g (0,03 Mol $NaOCH_3$) der Natriummethylat-Lösung werden weitere 200 g (1,33 Mol) P-ODOP zugetropft. Die Lösung bleibt dabei bis zum Schluß der Zugabe alkalisch (bzw. blau).

Es resultieren 295 g eines farblosen Öls von der Hydroxyl-Zahl 144 und dem Phosphor-Gehalt 16,2 % ($P_{ber.}$ 15,6 %).

Beispiel 10

(MV = 3,5; n = r = 1, m = 3,5)

Zu 26 g (0,2 Mol) Methacrylsäure-2-hydroxyäthyl-ester, 0,1 g Hydrochinon-mono-methyläther und einer Spatelspitze Thymolphthalein werden bei 5 - 10°C ?,3 g (0,02 Mol $NaOCH_3$) einer 33 %igen Natriummethylat-Lösung in Methanol zugefügt und bei 1,5 Torr das Methanol abgezogen. Dann werden innerhalb von 2 Stunden bei 5 - 10°C 105,1 g (0,7 Mol) P-ODOP zugetropft.

Auswaage = 134,5 g. Das viskose Reaktionsgemisch hat eine Hydroxyl-Zahl von 99 und einen Phosphor-Gehalt von 15,8 %. ($P_{ber.}$ = 16,1 %). Es polymerisiert beim Erhitzen mit Radikalbildnern, wie z.B. Azo-diisobutyronitril.

Beispiel 11

(MV = 5,0; n = r = 1, m = 5)

In 27,0 g (0,1 Mol) geschmolzenen Octadecylalkohol werden bei 60°C zunächst etwas Thymolphthalein-Indikator, dann 0,6 g (ca. 0,025 Mol) Natriumhydrid eingerührt bis die Mischung homogen ist. Dann werden zu der tiefblauen Schmelze zunächst bei 60°C und - wenn ca. ein Fünftel der Gesamtmenge zugegeben ist - bei 40 - 45°C insgesamt 75 g (0,5 Mol) P-ODOP innerhalb von 25 Minuten zugetropft. Die Schmelze bleibt dabei tiefblau.

Es resultieren nach Zugabe von 0,5 ml Eisessig 102 g einer schwach gelbgefärbten wachsartigen Masse von der Hydroxyl-Zahl 68 und vom Phosphor-Gehalt 15,0 % ($P_{ber}$ = 15,2 %). Das Reaktion sgemisch ist wasserlöslich und ergibt schäumende Lösungen.

Beispiel 12

(MV = 3,0; n = r = 1, m = 3)

Zu 29,0 g (0,5 Mol) Allylalkohol kommen 4,9 g (0,03 Mol $NaOCH_3$) einer 33 %igen Natriummethylat-Lösung in Methanol. Nach dem Abziehen des Methanols bei 25°C und 12 Torr werden 3 g von mitabdestilliertem Allylalkohol wieder zugefügt und bei 10°C unter ständiger Kühlung innerhalb von 50 Minuten 225,1 g (1,5 Mol) P-ODOP zugetropft.

Es resultieren 255 g eines farblosen Öls von der Hydroxyl-Zahl 142, dem Phosphor-Gehalt 18,0 % ($P_{ber.}$ = 18,2 %) und dem Brechungsindex $n_D^{20}$= 1.4670.

Beispiel 13

(MV = 1,0; n = 2, r = 1, m = 1)

62,1 g (1 Mol) Glykol, etwas Thymolphthalein und 1,6 g (0,01 Mol $NaOCH_3$) einer 33 %igen Natriummethylat-Lösung in Methanol werden bei Raumtemperatur vermischt und im Pumpen-Vakuum bei 20°C das Methanol abgezogen. Bei 5° - 8°C werden innerhalb von 60 Minuten unter ständiger Kühlung 150,1 g (1 Mol) P-ODOP zugetropft. Das Reaktionsgemisch bleibt dabei alkalisch (bzw. blau durch den Indikator). Es entfärbt sich erst beim Nachrühren von selbst durch Nebenreaktionen.

Es resultieren 213,5 g eines farblosen Öls von der Hydroxy-Zahl 550, dem Phosphor-Gehalt 14,2 % ($P_{ber.}$ = 14,5 %) und dem Rechungsindex $n_D^{20}$= 1.4602.

Beispiel 14

(MV = 1,3; n = r = 1, m = 1,3)

Zu 30,4 g (0,2 Mol) Methyl-äthyl-phosphinsäure-2-hydroxy-äthylester kommen bei 0 - 10°C 1,6 g (0,01 Mol $NaOCH_3$) einer 33 %igen Natriummethylat-Lösung in Methanol. Bei 10°C und 1,5 Torr wird das Methanol abgezogen. Dann werden 39 g (0,26 Mol) P-ODOP unter intensiver Kühlung innerhalb von 5 Minuten zugetropft.

Auswaage = 70 g. Das resultierende Öl ist schwach gelb gefärbt, hat eine Hydroxyl-Zahl von 170 und einen Brechungsindex von $n_D^{20}$= 1,4672.
$P_{gef.}$ = 19,9 % ($P_{ber.}$ = 20,3 %)

Beispiel 15

(MV = 2,0; n = r = 1, m = 2)

Zur Mischung aus 9 g (0,1 Mol) Glykolsäure-methylester, etwas Thymolphthalein und 30 g (0,2 Mol) P-ODOP werden bei 5 - 10°C innerhalb von 15 Minuten unter starken Kühlung insgesamt 1,5 g (0,0092 Mol) einer 33 %igen Natriummethylat-Lösung in Methanol derart zugetropft, das das Reaktionsgemisch stets gerade noch blau gefärbt, d.h. alkalisch, bleibt.

Es resultieren 39,5 g eines gelblichen Öls von der Hydroxyl-Zahl 177, dem Phosphor-Gehalt 15,5 % ($P_{ber.}$ = 15,7 %) und dem Brechungsindex $n_D^{20}$= 1,4570.

Beispiel 16

(MV = ca. 48; n = r = 1, m = ca. 48)

Zu 57,6 g (0,3 Mol) 2-n-Hexyl-2-oxo-1,3,2-di-oxa-phospholan und einer Spatelspitze Thymolphthalein kommen bei 10 -

$20^{o}C$ unter starker Kühlung innerhalb von 10 Minuten 0,3 g (0,0018 Mol $NaOCH_3$ und 0,0063 Mol $CH_3OH$) einer 33 %igen Natriummethylat-Lösung in Methanol in der Weise, daß die Lösung stets schwach blau, d.h. alkalisch bleibt. Beim Nachrühren bei Raumtemperatur verschwindet die Alkalität infolge von Nebenreaktionen.

Auswaage = 57,7 g. Das Reaktionsprodukt fällt an in Form eines zähen farblosen Öls von der Hydroxyl-Zahl 23, dem Phosphor-Gehalt 15,8 % ($P_{ber}$ = 16,1 %) und dem Brechungsindex $n_D^{20}$= 1,4706. Es ist in Wasser nur teilweise löslich und zeigt in Wasser einen pH-Wert von 6.

Beispiel 17

(MV (insgesamt) = 32,0; n = r = 1, m = 32)

Zu 22,0 g (0,1 Mol) 2-n-Octyl-2-oxo-1,3,2-dioxa-phospholan, 13,1 g (0,1 Mol) 2-Äthyl-2-oxo-1,3,2-dioxa-phospholan und einer Spatelspitze Thymolphthalein werden innerhalb von 30 Minuten bei 5 - $15^{o}C$ 0,3 g (0,00185 Mol $NaOCH_3$ und 0,00625 Mol Methanol) einer 33 %igen Natriummethylat-Lösung in Methanol unter starker Kühlung in der Weise zugetropft, daß das Reaktionsgemisch stets gerade schwachblau, d.h. alkalisch, bleibt. Es resultieren 35 g eines viskosen farblosen Öls vom Phosphor-Gehalt 17,3 % ($P_{ber.}$ = 17,7 %) und dem Brechungsindex $n_D^{20}$= 1,4696. Es ist in Wasser klar löslich. Die wässrige Lösung schäumt stark und trübt sich beim Erwärmen.

Beispiel 18

(MV = 4,5; n = r = 3, m = 1,5)

6,1 g (0,067 Mol) Glyzerin, etwas Thymolphthalein und 49,2 g (0,3 Mol) 2-n-Butyl-2-oxa-1,3,2-dioxa-phospholan werden auf $5^{o}C$ abgekühlt und bei $5^{o}C$ unter intensiver Kühlung 1 g (0,0062 Mol $NaOCH_3$) einer 33 %igen Natrium-

methylat-Lösung in Methanol in 30 Sekunden zugegeben. Die Temperatur steigt dabei trotz der Kühlung auf 20°C an. Das Reaktionsgemisch bleibt aber noch blau, d.h. alkalisch.

Auswaage = 56 g. Das Reaktionsgemisch fällt an in Form eines zähflüssigen farblosen Öls von der Hydroxyl-Zahl 226, dem Phosphor-Gehalt 16,5 % ($P_{ber.}$ = 16,8 %) und dem Brechungsindex $n_D^{20}$ = 1,4691.

Beispiel 19

(MV = 2,0; n = r = 1, m = 2)

Zu 18,8 g (0,2 Mol) 1-Chlor-propanol-2, etwas Thymolphthalein und 60,0 g (0,4 Mol) P-ODOP kommen bei 5°C unter Kühlung in 10 Minuten 2 g (0,0125 Mol $NaOCH_3$) einer 33 %igen Natriummethylat-Lösung in Methanol.

Auswaage = ca. 81 g. Das dünnflüssige, farblose Öl hat einen Brechungsindex $n_D^{20}$ = 1,4601, eine Hydroxyl-Zahl von 263 und einen Phosphor-Gehalt von 15,1 % ($P_{ber}$ = 15,3 %).

Beispiel 20

(MV = 3,0; n = r = 2, m = 3)

23,2 g (=0,2 Mol) 1,4-Cyclohexandiol und etwas Thymolphthalein werden bei 60°C in 30 g Tetrahydrofuran gelöst. Nach dem Abkühlen auf 10°C werden 2 g 33 %ige Natriummethylat-Lösung in Methanol und dann bei 10 - 15°C unter starker Kühlung innerhalb von 15 Minuten 90 g (0,6 Mol) P-ODOP zugetropft. Zur Aufrechterhaltung des alkalischen Mediums werden dabei weitere 2 g der Natriummethylat-Lösung zugefügt. Im Wasserstrahl-Vakuum wird das Tetrahydrofuran abgezogen.

Es hinterbleiben 117 g eines farblosen Öls. ($n_D^{20}$= 1,4802, OHZ = 301, $P_{gef.}$ = 15,8 % ($P_{ber.}$ = 15,9 %).

Beispiel 21

(MV = 6,0; n = r = 3, m = 2)

Zum Gemisch aus 7,1 g (0,083 Mol) Glyzerin und 75 g (0,5 Mol) P-ODOP kommen bei 25°C unter Kühlung innerhalb von 60 Minuten 2 g einer 33 %igen Natriummethylat-Lösung in Methanol.

Es resultieren 86 g eines farblosen viskosen Öls vom Brechungsindex $n_D^{20}$ = 1,4686, $P_{gef.}$ = 18,0 % ($P_{ber.}$ = 18,3 %).

Beispiel 22

(MV = 20, n = r = 3, m = 6,67)

Zum Gemisch aus 3,0 g (0,02 Mol) Triäthanolamin und 60 g (0,4 Mol) P-ODOP kommen bei 20°C unter Kühlung in 10 Minuten 2,5 g einer 33 %igen Natriummethylat-Lösung in Methanol.

Es resultieren 65,5 g eines farblosen viskosen Öls vom Brechungsindex $n_D^{20}$ = 1,4677. $P_{gef.}$ = 18,6 % ($P_{ber}$ = 18,9 %).

Beispiel 23

(MV = 20; n = r = 2, m = 10)

Zu 60 g (0,01 Mol) Polyäthylenglykol 6000, 60 g Tetrahydrofuran und 30 g (0,2 Mol) P-ODOP kommen bei 20 - 25°C in 20 Minuten unter Kühlung 2,8 g einer 33 %igen Natriummethylat-Lösung in Methanol. Das Tetrahydrofuran wird im Wasserstrahl-Vakuum abgezogen. Der Rückstand (= 91,5 g) zeigt einen Erstarrungspunkt bei 48°C.

Die gefundene Hydroxyl-Zahl liegt bei 36, der Phosphor-Gehalt bei 6,6 % ($P_{ber}$ = 6,8 %).

Beispiel 24

(MV = 5,0; n = r = 2, m = 5)

Zu 24,4 g (0,2 Mol) Bis-(2-hydroxyäthyl-)sulfid kommen etwas Thymolphthalein und 3 g einer 33 %igen Natriummethylat-Lösung in Methanol. Bei 2 Torr wird das Methanol abgezogen. Dann werden innerhalb von 15 Minuten unter Kühlung zunächst nochmals 125 g (ingesamt also 1 Mol) P-ODOP in 20 Minuten zugetropft.

Es resultieren 177 g eines Öls vom Brechungsindex $n_D^{20}$= 1,4767, der Hydroxyl-Zahl 224 und dem Phosphorgehalt 17,3 % ($P_{ber.}$ = 17,5 %).

Beispiel 25

(MV = 2; n = r = 1, m = 2)

52 g (0,5 Mol) N-2-Hydroxyäthyl-harnstoff und etwas Thymolphthalein werden in 150 g (1,0 Mol) P-ODOP und bei 7°C innerhalb von 10 Minuten unter Kühlung 2,5 g einer 33 %igen Natriummethylat-Lösung in Methanol zugetropft.

Die resultierenden 154 g eines viskosen farblosen Öls haben einen Rechungsindex von $n_D^{20}$= 1,4740, eine Hydroxyl-Zahl von 131 und einen Phosphor-Gehalt von 17,4 % ($P_{ber.}$ = 17,8).

Beispiel 26

(MV = 3,0; n = r = 1, m = 3)

Zu 30,8 g (0,2 Mol) 2-Hydroxyäthan-phosphonsäure-dimethylester, etwas Thymolphthalein und 73,2 g (0,6 Mol) 2-Methyl-2-oxo-1,3,2-dioxa-phospholan werden bie 5°C unter starker Kühlung innerhalb von 20 Minuten 5 g einer 33 %igen Natriummethylat-Lösung in Methanol zugetropft. Auch am Ende ist das Reaktionsgemisch noch alkalisch (bzw. blau gefärbt).

Es entfärbt sich erst nach 3 Stunden Stehen bei Raumtemperatur.

Es resultieren 109 g eines farblosen Öls vom Brechungsindex $n_D^{20}$= 1,4605, der Hydroxyl-Zahl 338 und dem Phosphor-Gehalt 22,3 % ($P_{ber.}$ = 22,7 %).

Beispiel 27

(MV = 10; n = r = 1, m = 10)

16 g (0,05 Mol) Methyl-tetradecyl-phosphinsäure-2-hydroxyäthylester werden in 75 g (0,5 Mol) P-ODOP gelöst und bei 6°C unter Kühlung 2,5 g einer 33 %igen Natriummethylat-Lösung in Methanol in 15 Minuten zugetropft.

Es resultieren 93 g eines farblosen Öls vom Brechungsindex $n_D^{20}$= 1,4665, der Hydroxyl-Zahl 79 und dem Phosphor-Gehalt 18,2 % ($P_{ber.}$ = 18,3 %).

Beispiel 28

(MV = 15; n = r = 3, m = 5)

Zur Mischung aus 3,07 g (0,033 Mol) Glyzerin, etwas Thymolphthalein und 67 g (0,5 Mol) 2-Vinyl-2-oxo-1,3,2-dioxaphospholan kommt bei 2°C unter intensiver Kühlung innerhalb von 20 Minuten 1 g einer 33 %igen Natriummethylat-Lösung in Methanol.

Es resultieren 71 g eines farblosen Öls vom Brechungsindex $n_D^{20}$=1,4718, der Hydroxyl-Zahl 133 und dem Phosphor-Gehalt 21,1 % ($P_{ber.}$ = 21,8 %).
Das Produkt vernetzt beim Erwärmen mit radialischen Polymerisations-Katalysatoren.

Beispiel 29

(MV = ca. 9,5; n = r = 1, m = ca. 9,5)

Zu 51,2 g (0,2 Mol) des Stereoisomeren-Gemischs der Formel

O O-$CH_2$

$C_3H_7$-P wird bei 40°C innerhalb von

O-CH-$CH_2$-O-$C_6H_5$

15 Minuten unter starker Kühlung 1 g (= 0,021 Mol $CH_3OH$ und 0,0062 Mol $NaOCH_3$) einer 33 %igen Natriummethylat-Lösung in Methanol zugetropft. Das Reaktionsprodukt (= 52 g) ist sehr viskos, hat einen Brechungsindex von $n_D^{20}$ = 1,5152, eine Hydroxyl-Zahl von 34 und einen P-Gehalt von 11,8 % ($P_{ber.}$ = 11,9 %).

Beispiel 30

(MV (ingesamt = 12; n = r = 1, m = 12)

Zu 39,7 g (0,2 Mol) des Stereoisomeren-Gemischs von der Formel O O-$CH_2$

$C_3H_7$-P und

O-CH-$CH_2$Cl

15,6 g (0,1 Mol) 2-Chlormethyl-2-oxo-1,3,2-dioxa-phospholan kommen bei 6°C innerhalb von 20 Minuten unter starker Kühlung 1,2 g (= 0,025 Mol Methanol und 0,007 Mol $NaOCH_3$) einer 33 %igen Natriummethylat-Lösung in Methanol.

Ausbeute = 36,5.

Das viskose Öl hat einen Brechungsindex von $n_D^{20}$ = 1,4862, eine Hydroxyl-Zahl von 35 und einen Phosphor-Gehalt von 16,1 % ($P_{ber.}$ = 16,4 %).

Beispiel 31

(MV = 5,0; n = r = 1, m = 5)

10,8 g (0,1 Mol) Benzylalkohol, 75 g (0,5 Mol) P-ODOP und 0,5 g Soda werden unter Überleiten von Stickstoff auf 150°C erhitzt und 30 Minuten bei 150°C gehalten.

Das Reaktionsgemisch (= 86 g) löst sich klar in Wasser, was bei der unumgesetzten Mischung der Ausgangsmaterialien nicht der Fall ist.
$n_D^{20}$= 1,4750. Die Hydroxyl-Zahl liegt bei 145.
P-Gehalt = 17,7 % ($P_{ber.}$ = 18,0 %).

Mit der doopelten Menge an Benzylalkohol (MV = 2,5 und m = 2,5) wird ebenfalls ein wasserlösliches farbloses Öl (vom Brechungsindex $n_D^{20}$= 1,4847, der Hydroxyl-Zahl 168 und dem P-Gehalt 15,7 % ($P_{ber.}$ = 16,0 %)) erhalten.

Beispiel 32

a) (MV = 8; n = r = 1, m = 8)

18,2 g (0,05 Mol) Tetrahydro-perfluor-octanol, 60,0 g (0,4 Mol) P-ODOP und 0,5 g Soda werden auf 150°C erhitzt und 80 Minuten bei 150°C gehalten. Nach dem Abkühlen resultiert ein farbloses Öl, das mit Wasser klar verdünnbar ist und stark schäumende Lösungen ergibt.
$n_D^{20}$= 1,4461. $P_{gef.}$ = 15,4 % ($P_{ber.}$ = 15,7 %) Säure-Zahl = 10,6, Hydroxyl-Zahl = 85.

b) (MV = 8; n = r = 1, m = 8)

Es wird gearbeitet wie in Beispiel 32a, aber ohne Soda-Zusatz. Nach 80 Minuten Rühren bei 150°C ist das Reaktionsgemisch jedoch noch nicht klar in Wasser (unter Schaumbildung) löslich, sondern erst nach 6 Stunden.
$n_D^{20}$= 1,4400. Die Säure-Zahl liegt bei 13,2, Die Hydroxyl-Zahl bei 105. $P_{gef.}$ = 15,4 % ($P_{ber.}$ = 15,7 %).

Anwendungs-Beispiele

Beispiel 1:

Für die Versuche wird eine Tufting-Auslegeware mit einem

Quadratmetergewicht von 650 g verwendet, bei dem ein Polyamidschlingenflor, 6 mm hoch, auf ein Trägermaterial aus vernadeltem Polypropylenvlies getuftet ist.

Die Vorstrich-Imprägnierlösung hat folgende Zusammensetzung:

300 Teile eines gemäß Beispiel 21 hergestellten Umsetzungsproduktes von 1 Mol Glyzerin und 6 Molen

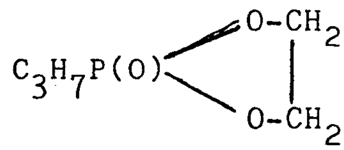 (= P-ODOP)

130 Teile einer 80 %igen Trimethylol-melamintrimethyläther-Lösung

150 Teile einer 50 %igen Butadien-Styrol-Dispersion (60:40)

300 Teile einer 3,5 %igen Methyl-hydroxyäthylcelluloselösung

5 Teile Ammoniumchlorid

400 Teile Kreide

200 Teile Wasser.

Der Vorstrich wird mit Hilfe einer Handrakel aufgebracht und 16 Minuten bei 140$^{o}$C getrocknet. Die Trockenauflage beträgt ca. 835 g/$m^2$.

Die Florfäden sind im Grundgewebe sehr gut verfestigt und zeigen ihre ursprüngliche Beweglichkeit, da die Imprägnierlösung für den Vorstrich nicht in den Flor eingedrungen ist. Der Tuftedteppich zeigt eine flexiblen Griff.

Im Vergleich hierzu wird ein Abschnitt der oben beschriebenen Tuftedware mit einem Vorstrich versehen, der keine flammhemmenden Komponenten enthält. Die Einbidung der Florfäden geschieht wieder mit einer 50 %igen Butadien-Styrol-Dispersion (60:40), der Kreide und Methyl-hydroxyäthylcelluloselösung, als Verdicker, zugesetzt wird.

Beide Teppichabschnitte werden nach der DIN 54 332 mit einer Beflammungszeit von 15, 30 und 60 Sekunden geprüft.

Der nicht flammhemmend ausgerüstete Teppichabschnitt brennt nach der Wegnahme der Prüfflamme ab. Der flammhemmend ausgerüstete Teppichabschnitt zeigt nach Wegnahme der Prüfflamme kein Weiter- oder Nachbrennen.

Der sehr gute, flammhemmende Effekt ist auch noch nach vier Shampoonierungen oder nach mehreren Naßbehandlungen feststellbar.

<u>Beispiel 2:</u>

Ein Tufting-Teppichabschnitt mit einem Quadratmentergewicht von 700 g, bestehend aus einem vernadelten Polypropylenvlies und einem Polyesterflor, grün gefärbt, mit einer Florhöhe von ca. 5,5 mm, wird mit einer Vorstrichmasse behandelt, die folgende Zusammensetzung hat:

280 Teile eines gemäß Beispiel 22 hergestellten Umsetzungsproduktes von 1 Mol Triäthanolamin + 20 Molen 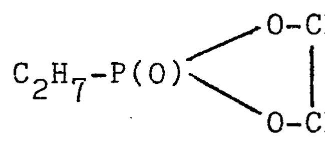 (= P-ODOP)

140 Teile einer 80 %igen Trimethylol-melamintrimethylätherlösung

180 Teile einer 50 %igen Butdien-Styrol-Dispersion (60:40)

350 Teile einer 3,5 %igen Methyl-hydroxyäthylcelluloselösung

5 Teile Ammoniumchlorid

400 Teile Kreide

200 Teile Wasser

Der Vorstrich wird wie im Beispiel 1 durchgeführt. Nach einer Aushärtung (15 Minuten bei 145°C) beträgt die Trockenauflage ca. 810 g/$m^2$. Der flammhemmend ausgerüstete Tufted-Teppich erfüllt die DIN-Prüfmethode 54 332 bei einer Beflammungszeit von 15, 30 und 60 Sekunden. Der Teppichabschnitt brennt nach Wegnahme der Flamme nicht weiter. Der Flor zeigt nach der Ausrüstung seine ursprüngliche Beweglichkeit, die Imprägniermasse für den Vorstrich ist nicht in den Flor eingedrungen.

Beispiel 3:

Der im Beispiel 1 beschriebene Tufting-Teppich wird mit einer Vorstrich-Imprägnierlösung folgender Zusammensetzung behandelt:

320 Teile eines analog Beispiel 9 hergestellten Umsetzungsproduktes von 1 Mol HO-$C_2H_4$-O-CO-$NH_2$ + 2 Mole 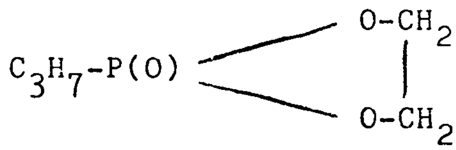

(= P-ODOP)

170 Teile einer 80 %igen Trimethylol-melamintrimethyläther-Lösung

170 Teile einer 50 %igen Butadien-Styrol-Dispersion (60:40)

350 Teile einer 3,5 %igen Methyl-hydroxyäthylcellulose-Lösung

4 Teile Ammoniumchlorid

380 Teile Kreide

210 Teile Wasser

Die Durchführung der Ausrüstung ist im Beispiel 1 beschrieben. Auch diese Tuftedware besteht den flammhemmenden Test nach DIN 54 332 bei den Beflammungszeiten von 15, 30 und 60 Sekunden. Der flammhemmende Effekt ist auch noch nach drei Shampoonierungen voll erhalten.

Die Flammhemmend ausgerüstete Tuftingware zeigt einen flexiblen Griff.

Beispiel 4:

Mit einer Vorstrich-Imprägnierlösung folgender Zusammensetzung wird die im Beispiel 1 beschriebene Tuftingware ausgerüstet:

300 Teile eines gemäß Beispiel 10 hergestellten Umsetzungsproduktes von 1 Mol Methacrylsäure-2-hydroxyäthyl-ester + 3,5 Mole P-ODOP
80 Teile einer 50 %igen N,N'-Dimethylol-methylenbisacrylamidlösung
50 Teile einer 80 %igen Trimethylol-melamintrimethylätherlösung
20 Teile Carbamid-Wasserstoffperoxid
1 Teil Kaliumpersulfat
200 Teile einer Butadien-Styrol-Dispersion 30 %ig (60:40)
350 Teile einer 3,5 %igen Methyl-hydroxyäthylcelluloselösung
400 Teile Kreide

Der Vorstrich wird mit Hilfe einer Handrakel aufgebracht und 14 Minuten bei 135 - 140°C getrocknet. Die Trockenauflage beträgt ca. 850 $g/m^2$.

Die flammhemmende Ausrüstung ist ausgezeichnet. Die Teppichabschnitte erfüllen DIN 54 322 "Bestimmung des Brennverhaltens von textilen Fußbodenbelägen" und DIN 54 333, "Bestimmung der Flammausbreitungsgeschwindigkeit auf Textilien".

Nach Wegnahme der Prüfflamme - für DIN 54 332 nach 15 Sek., 30 Sek. und 60 Sek. und für DIN 54 333 nach 15 Sek. - brennt der Teppich nicht weiter und nicht nach. Der flammhemmende Effekt überdauert mehrere Shampoonierungen.

Beispiel 5:

Eine Nadelvliesauslegeware, bestehend aus einem Fasergemisch von 50 % Polyamid 6 und 50 % Polyesterfasern mit einem Quadratmetergewicht von 750 g, die als Auslegeware in Wohnräumen verwendet wird, wird auf einem Zweiwalzenfoulard mit einer wässrigen Imprägnierlösung folgender Zusammensetzung behandelt:

| | | |
|---|---|---|
| 300 g/l | eines gemäß Beispiel 10 hergestellten Umsetzungsproduktes von 1 Mol Hydroxyäthylmethacrylat + 3,5 Molen P-ODOP |
| 85 g/l | einer 50 %igen N,N'-Dimethylolmethylenbisacrylamidlösung |
| 60 g/l | einer 80 %igen Trimethylol-melamintrimethylätherlösung |
| 20 g/l | Carbamid-Wasserstoffperoxid |
| 2 g/l | Kaliumpersulfat |
| 350 g/l | einer 40 %igen wässrigen Kunststoffdispersion eines Mischpolymerisates aus Äthylacrylat/Acrylnitril/N-Methylolacrylamid im Verhältnis 6:3:1. |

Der Abquetscheffekt beträgt ca. 105 %. Die Trocknung erfolgt 20 Minuten bei 145°C.

Der Nadelfilz ist elastisch und gut formbeständig. Der permanente Flammschutz überdauert mehrere Feinwäschen bei 50°C und mehrere Shampoonierungen.

Die Flammschutzprüfung erfolgt nach DIN 54 333. Ein Prüfling des gleichen Nadelvlieses wird mit 350 g/l der vorgenannten 40 %igen Kunststoff-Dispersion ausgerüstet. Er brennt nach Wegnahme der Prüfflamme weiter und durchläuft eine Teilzeitstrecke von 10 cm mit einer Brenngeschwindigkeit von 2 Minuten 30 Sekunden.

Der flammhemmend ausgerüstete Prüfling brennt dagegen nach Wegnahme der Flamme 5 Sekunden nach, aber nicht weiter.

Nach vier Shampoonierungen wurde eine Nachbrennzeit von 30 Sekunden festgestellt. Nach dieser Zeit ist die Flamme erloschen. Die Flamme hat sich jedoch nicht weiter ausgedehnt.

Beispiel 6:

Eine Nadelfilzauslegeware, wie sie im Beispiel 5 beschrieben ist, wird mit folgender Imprägnierlösung am Foulard behandelt. Der Abquetscheffekt beträgt ca. 100 %. Getrocknet wird bei 150°C, 18 Minuten.

280 g/l eines analog Beispiel 3 hergestellten Umsetzungsproduktes aus 1 Mol $CH_3OH$ und 5 Molen P-ODOP
150 g/l einer 80 %igen Trimethylolmelamintrimethylätherlösung
300 g/l einer 40 %igen Kunststoffdispersion eines Mischpolymerisates aus Äthylacrylat/Acrylnitril/N-Methylolacrylamid im Verhältnis 6:3:1
5 g/l Ammoniumchlorid

Der flexible und formstabile Nadelfilz zeigt einen sehr guten permanenten flammhemmenden Effekt nach DIN 54 333. Nach Wegnahme der Prüfflamme brennt der Nadelfilz 15 Sek. nach. Nach drei Shampoonierungen brennt der Filz 45 Sek. nach.

Patentansprüche:

1. Organische Phosphor-Verbindungen mit 2-Hydroxyalkylphosphonsäuregruppen der allgemeinen Formel I

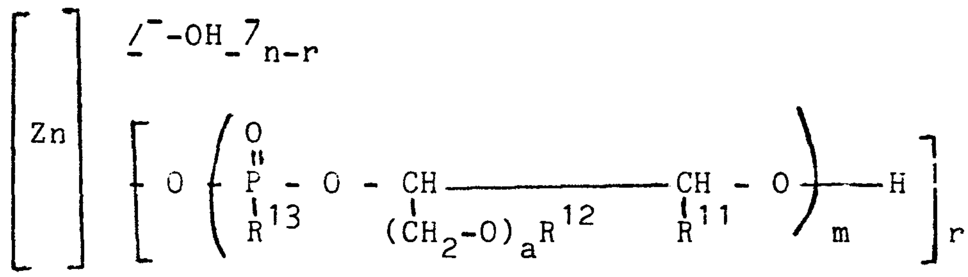

(I)

wobei die einzelnen Symbole der obigen Formel I folgende Bedeutung haben:

n ist eine ganze Zahl von 1 - 6, vorzugsweise 1 - 4;

r ist eine ganze Zahl von 1 bis n, also von 1 - 6, vorzugsweise die gleiche Zahl wie n;

m ist 1, wenn r n ist oder eine Zahl von 1 bis 150, bevorzugt 2 bis 10, wenn r = n ist;

a ist 0 oder 1;

$R^{11}$ ist ein gegebenenfalls ungesättigter und/oder verzweigter Alkylrest mit 1 - 5 Kohlenstoffatomen oder bevorzugt Wasserstoff;

$R^{12}$ ist ein gegebenenfalls ungesättigter und/oder verzweigter Alkylrest mit 1 - 22, bevorzugt 1 - 3 Kohlenstoffatomen, der gegebenenfalls durch 1 oder zwei Chlor- oder Bromatome substituiert sein kann, ein Cycloalkylrest mit 6 - 10 Kohlenstoffatomen, ein Aryl bzw. Aralkylrest mit bis zu 18 C-Atomen, wie vor allem Phenyl oder Benzyl, oder Crotonyl-, Acroyl- oder Methacroyl oder - aber nur wenn a = 0 ist - besonders bevorzugt auch Wasserstoff,

$R^{13}$ hat die gleiche Bedeutung wie $R^{12}$ außer Wasserstoff, bevorzugt $(C_1-C_3-)$Alkyl und kann zusätzlich ein einwertiger phosphorhaltiger Rest der Formel $R^{13}_p$

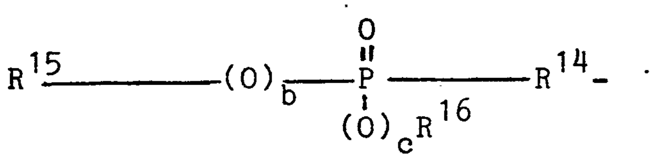

$(R^{13}_{p})$

sein, in dem

b und c für 0 oder 1,

$R^{14}$ für $C_1$-$C_{10}$-Alkylen, Cycloalkylen, Arylen oder Aralkylen, vorzugsweise für ($C_1$-$C_4$-)Alkylen, ferner

$R^{15}$ und $R^{16}$ für gegebenenfalls ungesättigte und/oder verzweigte $C_1$-$C_5$-Alkylreste, bevorzugt für Methyl oder Äthyl stehen;

$Z_n$ ist ein n-wertiger Rest aus der Gruppe geradkettige oder verzweigte aliphatische oder araliphatische Kohlenwasserstoffreste mit 1 bis 22, vorzugsweise 1 - 8, C-Atomen, die gegebenenfalls durch bis zu zwei Carbonestergruppen (-O-CO-), bis zu 2 -S- und/oder $NR^2$-Reste mit $R^2$=($C_1$-$C_4$-)Alkyl, insbesondere Methyl, unterbrochen und/oder durch Fluor, Chlor, Brom-atome, oder gegebenenfalls ungesättigte Carbonsäureestergruppen oder Carbonamid-, Carbamat- oder Harnstoffgruppen oder durch primäre, sekundäre bzw. tertiäre Aminogruppen substituiert sein können, oder äthergruppenhaltige Kohlenwasserstoffe mit Äquivalent-Gewichten bis zu 8000, bevorzugt bis zu 4000, die sich durch Oxäthylierung oder/und Oxpropylierung von n-wertigen aliphatischen, araliphatischen oder aromatischen Hydroxyl-Verbindungen, Aminen oder/und Mono- bzw. Dicarbonsäuren mit 1 - 22, vorzugsweise 1 - 10, C-Atomen ergeben, wobei die araliphatischen bzw. die aromatischen Reste sich von Benzol, Alkyl- bzw. Alkylenbenzolen mit bis zu 18 C-Atomen, Naphthalin, Diphenyl, Diphenylmethan, Diphenyläther oder 2,2-Diphenylpropan ableiten, und gegebenenfalls im Kern durch 1 oder 2 Methoxy- bzw. Äthoxygruppen bzw. im Kern und/oder zu den Seitenketten durch F-, Cl-, Br-Atomen, vorzugsweise bis fünfmal substituiert sein können,

oder phosphorhaltige Reste der allgemeinen Formel

Phenyl oder Benzyl, oder Crotonyl-, Acroyl- oder Methacroyl oder - aber nur wenn a = 0 ist - besonders bevorzugt auch Wasserstoff,

$R^{13}$ hat die gleiche Bedeutung wie $R^{12}$ außer Wasserstoff, bevorzugt $(C_1-C_3-)$Alkyl und kann zusätzlich ein einwertiger phosphorhaltiger Rest der Formel $R^{13}_P$

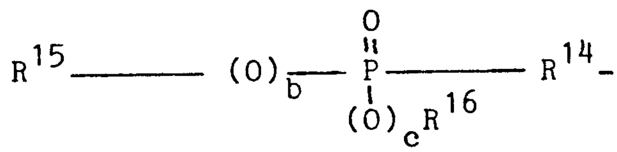

$(R^{13}_P)$

sein, in dem

b und c für 0 oder 1,

$R^{14}$ für $C_1-C_{10}$-Alkylen, Cycloalkylen, Arylen oder Aralkylen, vorzugsweise für $(C_1-C_4-)$Alkylen, ferner

$R^{15}$ und $R^{16}$ für gegebenenfalls ungesättigte und/oder verzweigte $C_1-C_5$-Alkylreste, bevorzugt für Methyl oder Äthyl stehen;

$Z_n$ ist ein n-wertiger Rest aus der Gruppe geradkettige oder verzweigte aliphatische oder araliphatische Kohlenwasserstoffreste mit 1 bis 22, vorzugsweise 1 - 8, C-Atomen, die gegebenenfalls durch bis zu zwei Carbonestergruppen (-O-CO-), bis zu 2 -S- und/oder $NR^2$-Reste mit $R^2=(C_1-C_4-)$Alkyl, insbesondere Methyl, unterbrochen und/oder durch Fluor, Chlor, Brom-atome, oder gegebenenfalls ungesättigte Carbonsäureestergruppen oder Carbonamid-, Carbamat- oder Harnstoffgruppen oder durch primäre, sekundäre bzw. tertiäre Aminogruppen substituiert sein können, oder äthergruppenhaltige Kohlenwasserstoffe mit Äquivalent-Gewichten bis zu 8000, bevorzugt bis zu 4000, die sich durch Oxäthylierung oder/und Oxpropylierung von n-wertigen aliphatischen, araliphatischen oder aromatischen Hydroxyl-Verbindungen, Aminen oder/und Mono- bzw. Dicarbonsäuren mit 1 - 22, vorzugsweise 1 - 10, C-Atomen ergeben, wobei die araliphatischen bzw. die aromatischen Reste sich von Benzol, Alkyl- bzw. Alkylenbenzolen mit bis zu 18 C-Atomen, Naphthalin, Diphenyl, Diphenylmethan,

Diphenyläther oder 2,2-Diphenylpropan ableiten, und gegebenenfalls im Kern durch 1 oder 2 Methoxy- bzw. Äthoxygruppen bzw. im Kern und/oder zu den Seitenketten durch F-, Cl-, Br-Atomen, vorzugsweise bis fünfmal substituiert sein können,
oder phosphorhaltige Reste der allgemeinen Formel

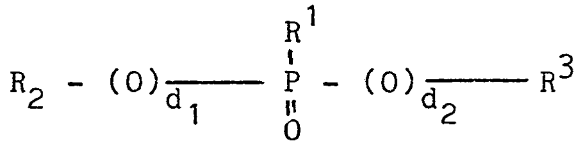 $Z_{n,1}$

in denen
$d_1$, $d_2$ unabhängig voneinander 0 oder 1 und
$R^1$ Alkyl-, Hydroxyalkyl-, gegebenenfalls $(C_1-C_2)$-alkyliertes bzw. -dialkyliertes Aminoalkyl, Halogen- (vorzugsweise Cl-)alkyl mit 1 bis 3 C-Atomen, Alkenyl mit 2 oder 3 C-Atomen oder Phenyl, das gegebenenfalls durch 1 oder 2 Halogenatome, vorzugsweise Cl, Br substituiert sein kann, sind und
$R^2$, $R^3$ das gleiche wie $R^1$ bedeuten mit der Einschränkung, daß mindestens einer der Reste $R^2$ oder $R^3$ ein Alkylenrest mit 2 - 5 C-Atomen ist,
oder phosphorhaltige Reste der allgemeinen Formel

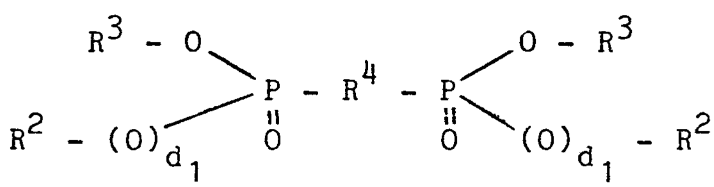 $Z_{n,2}$

in der $d_1$, $R^2$, $R^3$ Bedeutungen wie in $Z_{n,1}$ haben und $R^4$ einen geradkettigen oder verzweigten $(C_1-C_6-)$Alkylen-, Phenylen-, Xylylen-Rest oder einen Rest

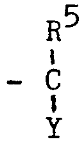 mit Y = OH, $NH_2$ und $R^5$ $(C_1-C_3-)$Alkyl bedeuten,

oder phosphorhaltige Reste der allgemeinen Formel

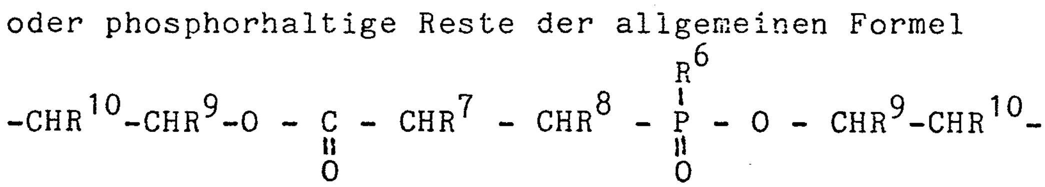 $Z_{n,3}$,

0003599

Nummer der Anmeldung

Europäisches Patentamt

# EUROPÄISCHER RECHERCHENBERICHT

EP 79 100 364.3

| Kategorie | Kennzeichnung des Dokuments mit Angabe, soweit erforderlich, der maßgeblichen Teile | betrifft Anspruch | KLASSIFIKATION DER ANMELDUNG (Int.Cl.²) |
|---|---|---|---|
| | DE - A - 2 556 482 (HOECHST)<br>* Anspruch 3, Pos. $a_1$;<br>Seite 7, Zeile 20-23 *<br>--- | 2, 3 | C 07 F 9/40<br>D 06 M 13/32<br>D 06 M 15/62 |
| A | DE - A - 2 338 935 (STAUFFER)<br>* Anspruch 1, 16 *<br>---- | 1, 3 | |

RECHERCHIERTE SACHGEBIETE (Int. Cl.²)

C 07 F 9/40
C 08 G 79/04
D 06 M 13/00
D 06 M 15/62

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 28.05.1979 | KNAACK |

EPA form 1503.1 06.78